(19) **Europäisches Patentamt / European Patent Office / Office européen des brevets**

(11) **EP 1 675 444 B1**

(12) # EUROPEAN PATENT SPECIFICATION

(45) Date of publication and mention
of the grant of the patent:
**13.02.2008 Bulletin 2008/07**

(51) Int Cl.:
*H05H 1/00* *(2006.01)*       *H05H 1/12* *(2006.01)*

(21) Application number: **04300933.1**

(22) Date of filing: **22.12.2004**

(54) **Process for determining local emissivity profile of suprathermal electrons**

Verfahren zur Bestimmung des lokalen Emissionsprofils von suprathermischen Elektronen

Procédé de détermination du profil local d'émissivité d'électrons suprathermiques

(84) Designated Contracting States:
**CH DE FR GB IT LI**

(43) Date of publication of application:
**28.06.2006 Bulletin 2006/26**

(73) Proprietor: **COMMISSARIAT A L'ENERGIE ATOMIQUE**
**75015 Paris (FR)**

(72) Inventors:
• **Mazon, Didier**
  **04100 Manosque (FR)**
• **Barana, Oliveiro**
  **13100 Aix-en-Provence (FR)**
• **Peysson, Yves**
  **13100 Aix-en-Provence (FR)**

(74) Representative: **Poulin, Gérard et al**
**Société BREVATOME**
**3, rue du Docteur Lancereaux**
**75008 Paris (FR)**

(56) References cited:
• BELL R E: "Inversion technique to obtain an emissivity profile from tangential line-integrated hard X-ray measurements" REVIEW OF SCIENTIFIC INSTRUMENTS USA, vol. 66, no. 1, January 1995 (1995-01), pages 558-560, XP002326346 ISSN: 0034-6748
• VON GOELER S ET AL: "Measurement of electron energy distribution from X-ray diagnostics: foil techniques used with the hard X-ray camera on PBX-M" FUSION ENGINEERING AND DESIGN ELSEVIER SWITZERLAND, vol. 34-35, March 1997 (1997-03), pages 97-105, XP002326347 ISSN: 0920-3796
• PEYSSON Y ET AL: "Hard X-ray CdTe tomography of tokamak fusion plasmas" NUCLEAR INSTRUMENTS & METHODS IN PHYSICS RESEARCH, SECTION A (ACCELERATORS, SPECTROMETERS, DETECTORS AND ASSOCIATED EQUIPMENT) ELSEVIER NETHERLANDS, vol. 458, no. 1-2, 1 February 2001 (2001-02-01), pages 269-274, XP002326348 ISSN: 0168-9002
• PEYSSON Y ET AL: "Tomography of the fast electron bremsstrahlung emission during lower hybrid current drive on TORE SUPRA" REVIEW OF SCIENTIFIC INSTRUMENTS AIP USA, vol. 70, no. 10, October 1999 (1999-10), pages 3987-4007, XP002326349 ISSN: 0034-6748

**Description**

**Technical field and Prior Art**

The invention concerns a process for determining local emissivity profile of Suprathermal Electrons (SE) starting from measurement data acquired by Hard X-Ray (HXR) diagnostics.

More particularly, the invention deals with a real-time process for determining local emissivity profile of suprathermal electrons specially adapted to temporal constraints and performing the inversion of line integrated HXR measurements using Abel inversion techniques and geometrical data. The "real-time" notion concerns data acquisition and associated treatments on a time scale shorter or equivalent to the main characteristic time of the considered physic process which is, within the framework of the invention, correlated to the diffusion time of the HXR local emissivity profile (some tenths of ms).

The main application of the process according to the invention is the real-time control of the profile, which has direct and important effects on the global confinement and on the performances in magnetically confined fusion plasmas.

Controlled nuclear fusion seems to be nowadays the most tempting candidate for the production of clean and basically unlimited energy, in substitution to the fossil one, which is polluting and limited to few decades yet.

Its principle is simple, the objective being to reproduce on earth, inside a machine called Tokamak, the same mechanisms taking place in the sun. An ionized gas ring at very high temperature called plasma, strongly confined by the combined action of a high magnetic field and an intense electrical current of some mega-amps, develops in its centre deuterium-tritium fusion reactions producing neutrons, which convey energy: this is the basis of the Tokamak principle.

The optimization of the physical and technological constraints of a fusion device leads to the definition of the concept of 'advanced Tokamak'. It consists in producing stationary improved confinement modes in which the total amount of current is generated in a non-inductive way (an important part of it is given by the auto-generated plasma bootstrap current). The achievement of such 'advanced Tokamak' modes requires the capability to control the current density profile, which can be obtained only by means of additional methods of generation of non-inductive current. Among the various methods known about Tokamaks, the injection of high power electromagnetic waves constitutes an ideal candidate for the generation of additional non-inductive current in the plasma. For this reason it is crucial to be able to control the power deposition profile of the hybrid wave, which is currently the most effective method for generating additional current. The propagation and the absorption of this wave are studied in the Tokamak Tore Supra (TS) by means of a spectrometric HXR diagnostics. The measurement of the radiation emitted in the range of HXR by the SE accelerated by the hybrid wave is the most effective method to get information about the wave power deposition profile. This fact justified the installation in TS, in January 1996, of a new HXR diagnostics of spectrometry having excellent space and temporal resolution, particularly adapted to study the control of the current profile over long periods (see reference [1]). The spectrometric system comprises 59 detectors distributed into 2 cameras, one horizontal and the other vertical, thus making it possible to increase the space redundancy of measurements, by intercepting the plasma section with detectors' lines of sight whose slopes are very different. The diagnostics measures the plasma emissivity integrated along each line of sight, the main objective being to determine the radial profile of the plasma emissivity from raw integrated measurements. This can be carried out by a traditional Abel inversion method under certain assumptions.

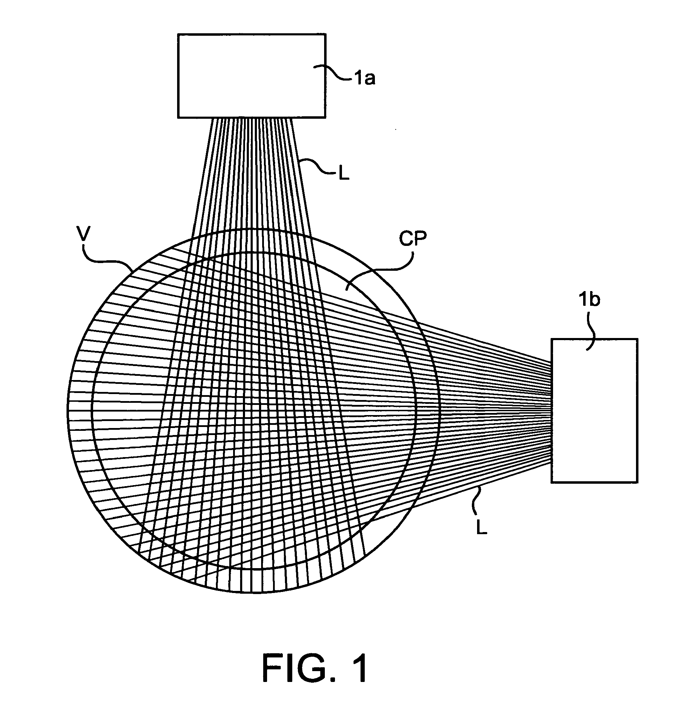

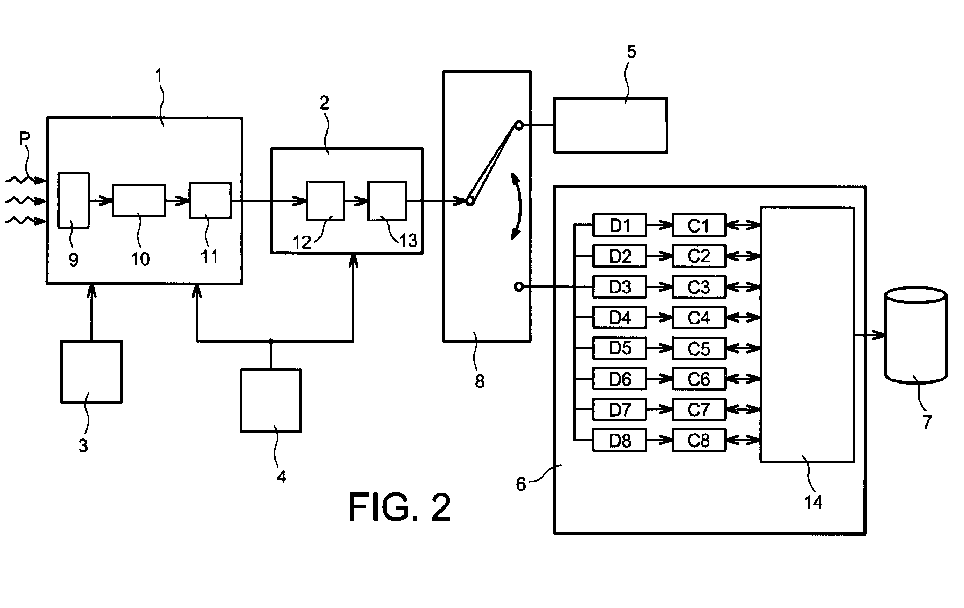

Fig. 1 represents a cross view of a Tore Supra vacuum vessel V together with an example of circular plasma CP and lines of sight L (chords) of HXR diagnostics. The configuration shown in fig. 1 consists of two cameras 1a, 1b and a vessel V in which is located the circular plasma CP. Camera 1a is a vertical camera with 21 lines of sight L and camera 1b is a horizontal camera with 38 lines of sight L. This configuration is not the unique possible one. For example, the cameras could invert their position, or could change their relative position in the framework of the cut plane, or as well only one camera can be used. The photons emitted by the plasma release all or a part of their energy when they hit the detectors placed in the cameras. The energy released at that time is converted into a pulse. The detectors are made of Cadmium-Tellurium (CdTe) semiconductors. The treatment of the pulses coming from the detectors is carried out by a processing electronic chain especially optimized for CdTe. Figure 2 represents such a processing electronic chain according to the prior art.

The processing electronic chain comprises a camera 1, a receiver frame 2, a polarization circuit 3, a power supply circuit 4, a calibration circuit 5, a processing circuit 6 and a data storage unit 7. A switch 8 connects the output from the receiver frame 2 either to the input of the processing circuit 6 (in the measurement phase) or to the input of the calibration circuit 5 (in the calibration phase). The camera 1 comprises a detector 9 based on a CdTe semiconductor, a preamplifier 10 and a differential emitter 11. The receiver frame 2 comprises a differential receiver 12 and a linear amplifier 13. The polarisation circuit 3 polarises the detector, for example with a polarisation voltage equal to -100 V. The power supply circuit 4 supplies power to the electrical circuits 10 and 11 of the camera 1 and 12 and 13 of the receiver frame 2, for example with a +/-12V, 40mA power supply. The processing circuit 6 comprises a set of discriminators D1 to D8, a set of counters C1 to C8 and a data acquisition unit 14.

The detector 9 is a material medium in which the photons P emitted by the plasma transfer all or some of their energy. The energy transferred in the detector is converted into electrical pulses, that are then processed by an electronic counting system specially optimized for CdTe. Charge carriers in the semiconductor are collected by the preamplifier 10. The differential emitter 11 transmits the signal output by the preamplifier 10, through the differential receiver 12, to the linear amplifier 13, more commonly called the "shaper". The function of the shaper is to transform received pulses, usually having a fairly long relaxation time and consequently having the risk of overlapping if the count rate becomes too high, into fairly short pulses that can be easily counted in the last part of the acquisition system. The gain of the shaper may be adjusted manually in order to calibrate the signal inside the energy domain.

During the measurement phase, the switch 8 connects the output from the receiver frame 2 to the input of the processing circuit 6. The received pulse height is then analyzed by the eight integral discriminators D1 - D8. The integral discriminators D1 - D8 send logical signals to the counters C1 - C8 to which they are connected, when the amplitude of the rising front of the pulse is greater than a discrimination threshold. Reception of the logical signal by a counter $C_i$ (i = 1, 2, ..., 8) adds 1 to the buffer memory of the counter $C_i$, that consequently contains the number of counts recorded with energy greater than the discrimination threshold. At each sampling step (i.e. the time at which data are acquired, for example 16 ms), the buffer memory of each counter is read and is then reset to zero by the data acquisition unit 14 that transmits the eight count results in the data storage unit 7.

This system has several disadvantages.

Firstly, no information related to the input signal is available, which prevents any display of the shaped pulse so that stacking as a result of the simultaneous arrival of two photons on the detector cannot be distinguished. Also, the measured signals are not available in real time, which prevents any profile inversion in real time and consequently any feedback control of the power deposit of the hybrid wave and any feedback control of the current profile.

A calibration step is necessary to obtain reliable measurements. The output from the receiver frame 2 is then connected to the input of the calibration frame 5.

Calibration consists of adjusting the gain of the shaper circuit so as to have good correspondence between the amplitude of the pulse output by the receiver frame 2 and the energy of the incident photon. As it has already been mentioned above, the spectrometric system according to prior art comprises two cameras, one vertical and the other horizontal, including 21 detectors for the vertical camera and 38 detectors for the horizontal camera, giving a total of 59 detectors. The calibration is then done for each detector.

Calibration is essential in order to obtain a precise reconstruction of emissivity profiles in the different energy channels. Calibration may then be done using a digital spectrometer with 1024 channels and using three radioactive sources. The gain of the shaper is then adjusted so as to put the main peak of each source at the right energy.

The calibration step also has disadvantages. It requires disconnection of part of the electronics of the acquisition system that is then not included in the calibration. The result might lead to calibration errors. Furthermore, this disconnection increases manipulations made on the system and consequently risks of deterioration of the system. Furthermore, the camera 1 is far from the acquisition system to which the calibration bench is connected. This then means that the operator needs to go back and forward many times when he has to modify the position of the source with respect to the camera.

Another process for determining a local emissivity profile is disclosed by R. Bell: "Inversion technique to obtain an emissivity profile from tangential line-integrated hard X-ray measurements" - Rev. Sci. Instrum. 66(1), January 1995.

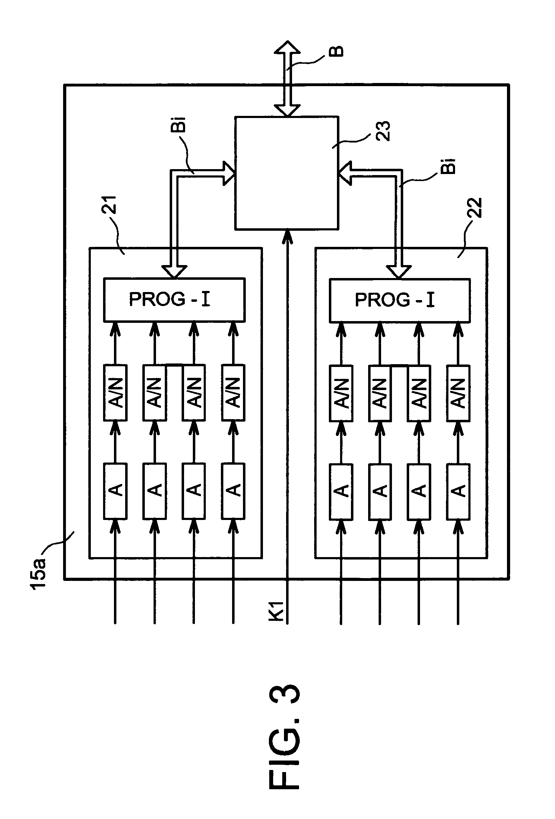

The above mentioned disadvantages are cancelled by means of an acquisition electronic circuit which is the subject of a French patent application entitled "Circuit électronique de diagnostic de spectrométrie" filed at the French Patent Office in the name of the Applicant with the filing number 04 50338, on February 24th, 2004. This acquisition electronic circuit is described below from figure 3 to figure 7.

The process according to the invention processes the data output from an acquisition electronic circuit as the one described in the above mentioned French patent application. An advantage of the process according to the invention is to obtain a real-time emissivity profile (treatment which is performed, for example, within the aforementioned 16ms) and, therefore to possibly allow a real-time emissivity profile monitoring and control.

The process according to the invention contains some computation steps. It is to be noted that symbol "*" is used to represent any kind of multiplication in these computations.

## Statement of the invention

According to the offended claims, the invention concerns a process for determining a local emissivity profile of suprathermal electrons coming from an ionized gas ring, called plasma, placed in a toric vessel, with the use of a spectrometric system comprising at least one detector, the detector being positioned in relation with the toric vessel so that the line of sight of the detector intercepts a cross section of the toric vessel and a cross section of the ionized gas ring with radius "a", said cross section of the ionized gas ring being off centre against said cross section of the toric vessel, characterized by the following steps:

- to compute the first NB zeros $Z_1, Z_2, ..., Z_{NB}$ of the Bessel function Jo of order 0,
- to build a matrix Jp, the element of row k and column j of which is $Jo(\rho_k * Z_j)$, with $Jo(\rho_k * Z_j)$ being the function Jo of order 0 of arguments $(\rho_k * Z_j)$ (k=1, 2, ..., NM and j=1, 2, ..., NB), with $\rho_k$ the normalized distance with respect to radius "a" between a point $P_k$ of the plasma and the plasma centre, the matrix Jp being such that:

$$A_\rho = J_\rho * C,$$

with Ap being an array, the elements of which represent the emissivity profile along a normalized plasma radius $\rho$ and C being a matrix of coefficients,

- to read measurement data, said measurement data comprising a plasma emissivity datum Y representing the plasma integrated emissivity measured by the detector along the line of sight, plasma centre coordinates comprising major radius value Rp and vertical shift value Zp, and plasma minor radius "a",
- to compute the geometrical position of the line of sight segment which intercepts the cross section of the ionized gas ring with respect to a coordinate system centred in (Rp, 0, Zp),
- to compute the position of NL successive points $P_1, P_2, ..., P_{NL}$ on said line of sight segment, $P_1$ and $P_{NL}$ being the points of said line of sight segment which intercept boundaries of the ionized gas ring cross section,
- to compute the distances $r_i$ between the points $P_i$ (i=1, 2, ..., NL) and the plasma centre and to computate the normalized distances $\rho_i = r_i/a$,
- to build a matrix $J_{\rho i}$, the element of row i and column j of which is $Jo(\rho_i * Z_j)$, with $Jo(\rho_i * Z_j)$ being the function Jo of order 0 of arguments $\rho_i * Z_j$ (i=1, 2, ..., NL and j=1, 2, ..., NB), the matrix $J_{\rho i}$ being such that:

$$A_{\rho i} = J_{\rho i} * C,$$

with $A_{\rho i}$ being an array representing the emissivity profile along the normalized distances $\rho_i$ and C being said matrix of coefficients,

- to compute for each column j of $J_{\rho i}$, (j=1, 2, ..., NB) the integral $F_j$ such that:

$$F_j = \delta * \Sigma_i \ Jo(\rho_i * Z_j)$$

where $\delta$ is a geometric constant and i goes from 1 to NL,

- to compute a matrix F such that:

$$F = [F_1 \ F_2 \ ... \ F_{NB}]$$

- to compute a matrix $F^{-1}$, the pseudo-inverse matrix of matrix F,
- to compute a matrix M such that:

$$M = (J_\rho * F^{-1})/EG$$

with EG being the geometrical extension of the detector,

- to calculate the suprathermal electron local emissivity profile array Ap such that:

$$A_\rho = M * Y/1000$$

According to an additional feature, the process of the invention comprises a checking step to check the elements of the array Ap, said checking step comprising at least one of the following steps:

- a) checking if the element of the array Ap which represents the local emissivity profile on the ionized gas ring circumference is different from zero,
- b) checking if any element of the array Ap is a negative or a value superior to a threshold value,
- c) checking if the number of local maxima of the array Ap is greater than a prefixed maximum number allowed,

According to another additional feature, the process of the invention comprises:

- computation of $(J_\rho)^{-1}$ the pseudo-inverse matrix of matrix Jp,
- computation of a matrix N such that:

$$N = (F \star (J_\rho)^{-1}) \star EG,$$

- computation of the reconstructed line integrated measurement $Y_R$ corresponding to the integrated plasma emissivity datum Y such that:

$$Y_R = N \star A_\rho \star 1000$$

- computation of value $\chi^2$ such that:

$$\chi^2 = \sum_{n=1}^{NC_F} (Y_n - Y_{Rn})^2 / NC_F$$

with $Y_n$ being the integrated plasma emissivity datum representing the integrated plasma emissivity measured by a detector of rank n, $Y_{Rn}$ being the reconstructed line integrated measurement corresponding to the plasma emissivity datum $Y_n$ and $NC_F$ being the number of detectors,
- checking if $\chi^2$ is greater than a fixed threshold.

According to another additional feature, before the computation of value $\chi^2$, the process of the invention comprises a step for checking if at least one element of the array $Y_R$ is negative.

According to another additional feature of the process of the invention, if at least one element of the array $Y_R$ is negative, the process stops or it continues if not.

According to another additional feature of the process of the invention, if $\chi^2$ is greater than a fixed threshold value, the process stops or it continues if not.

According to another additional feature of the process of the invention, if the points $P_i$ are equally spaced, the computation of the distances $r_i$ between points $P_i$ (i=1, 2, ..., NL) and the plasma centre is only made for the points $P_i$ located between $P_1$ and the middle of segment $P_1P_{NL}$, $P_1$ being included, or located between the middle of segment $P_1P_{NL}$ and $P_{NL}$, $P_{NL}$ being included.

According to another additional feature, the process of the invention comprises an averaging phase to calculate said measurement emissivity datum Y in the form of a mean of raw integrated emissivity data computed along a prefixed number of consecutive time samples.

According to another additional feature, the process of the invention comprises a step to filter raw measurement data.

According to another additional feature, the process of the invention comprises a preliminary step to compare a number of available lines of sight to a minimum value allowed, so that the process stops if said number of available lines of sight is lower than said minimum value allowed.

The invention also relates to a process for real-time determination of local emissivity profile of suprathermal electrons coming from an ionized gas ring, called plasma, placed in a toric vessel, said process comprising:

- reading of at least one real-time measurement Y of integrated plasma emissivity along a line of sight of at least one detector positioned in relation with the toric vessel so that the line of sight of the detector intercepts a circular cross section of the toric vessel and a circular cross section of the ionized gas ring with radius "a",
- real-time reading of the plasma centre coordinates comprising major radius value Rp, vertical shift value Zp and plasma radius "a",
- real-time determination of the local emissivity profile based on a process according to the invention.

The process according to the invention allows the reconstruction, in Tore Supra (TS), of local emissivity profile of Suprathermal Electrons (SE) starting from integrated Hard-X-Ray (HXR) measurements data.

The process is based on a tomographic inversion and, more particularly, on an Abel inversion by means of Bessel functions Jo of order 0, which exploits the raw data (line-integrated measurements) acquired by the current real-time HXR TS diagnostics.

The reconstructed local emissivity profile can advantageously be controlled in feedback, with direct effects on the total current density profile. The algorithm also allows a check of the validity of the reconstructed profile based on its shape and on a comparison between the reconstructed raw data and the measured one ($\chi^2$ comparison).

The algorithm can also exploit filtering techniques of raw data in order to avoid statistical noise. The reconstructed SE profile is normalized at the end and then sent (if all the validity conditions are satisfied) to the control system for the feedback control.

Advantageously, the process according to the invention has the following capabilities:

    o robustness;

    o reliability;

    o fast computational time in order to respect real-time constraints.

**Brief description of the figures**

Other features and advantages of the invention will become clearer when reading a preferred embodiment of the invention described with reference to the appended figures, wherein:

    Figure 1 already described represents a cross section of a Tore Supra vacuum vessel together with an example of circular plasma;

    Figure 2 already described represents a HXR radiation diagnostic measurement chain according to the prior art;

    Figure 3 represents an example of a real-time acquisition electronic circuit intended to output the measurement data which are processed according to the process of the invention;

    Figure 4 is a typical representation of a signal which enters the real-time acquisition electronic circuit of figure 3;

    Figure 5 represents a detailed part of the real-time acquisition electronic circuit of figure 3;

    Figure 6 represents an example of contents of histogram memory;

    Figure 7 represents an improvement of the real-time acquisition electronic circuit of figure 3;

    Figure 8 represents an example of spectrometry diagnostic system with associated units which implement the process according to the invention;

    Figure 9A represents an above view of a Tore Supra vacuum vessel placed in a cartesian coordinate system whose centre is the centre of the Tore Supra vacuum vessel;

    Figure 9B represents a cross view of the Tore Supra vacuum vessel of figure 9A;

    Figure 10 represents the values of NB Bessel functions Jo of order 0 (NB = 6), computed along NM equally spaced points of a normalized plasma minor radius p multiplied by the first NB zeros $Z_i$ (i = 1 .. NB) of the function Jo.

    Figure 11 represents, superimposed, the values of the NB Bessel functions Jo whose arguments are the distances $r_i$ from the geometric center of the plasma (normalized with respect to the plasma minor radius a) of NL points of a portion of line of sight L included in the plasma, multiplied by the NB zeros $Z_i$.

    Figure 12 represents a simplified scheme of the overall process according to the invention;

    Figure 13 represents the basic steps of the process according to the invention;

    Figures 14-26 represent flow-charts corresponding to the basic steps of figure 13.

    Fig. 27 represents an example of SE local emissivity profile worked out with the adopted inversion method during a TS discharge (shot number 32570 at time t = 10s).

In all the figures, the same marks denote the same elements.

**Detailed description of embodiments of the invention**

The process according to the invention treats measurement data output from a real-time acquisition electronic circuit which is the subject of a French patent application entitled "Circuit électronique de diagnostic de spectrométrie" filed at the French Patent Office in the name of the Applicant with the filing number 04 50338, on February 24th, 2004.

Figure 3 represents an example of real-time acquisition electronic circuit which outputs the measurement data processed in the frame of the invention. The circuit 15a comprises two data processing modules 21, 22 and a programmable logic interface and control component 23. Each data processing module 21, 22 is connected to the programmable logic interface and control component 23 through a bus Bi. A data processing module 21, 22 may for example include four input amplifiers A in parallel, four analogue/digital (A/D) converters mounted in series with the four input amplifiers, and a programmable logic pulse processing component PROG-I. The programmable logic interface and control component 23 is controlled by a command K1 that controls the data acquisition rate. A VME (VERSA® Module Eurocard® ) bus B outputs the measurement data to be processed by the process according to the invention.

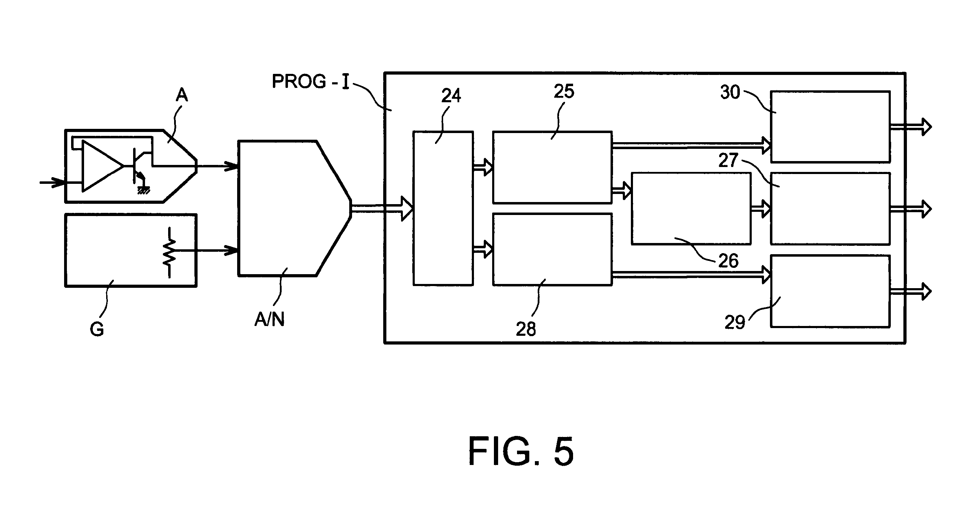

Each programmable logic pulse processing component PROG-I applies a set of operations on the digital data that it receives that are presented in more detail below with the description for Figure 5.

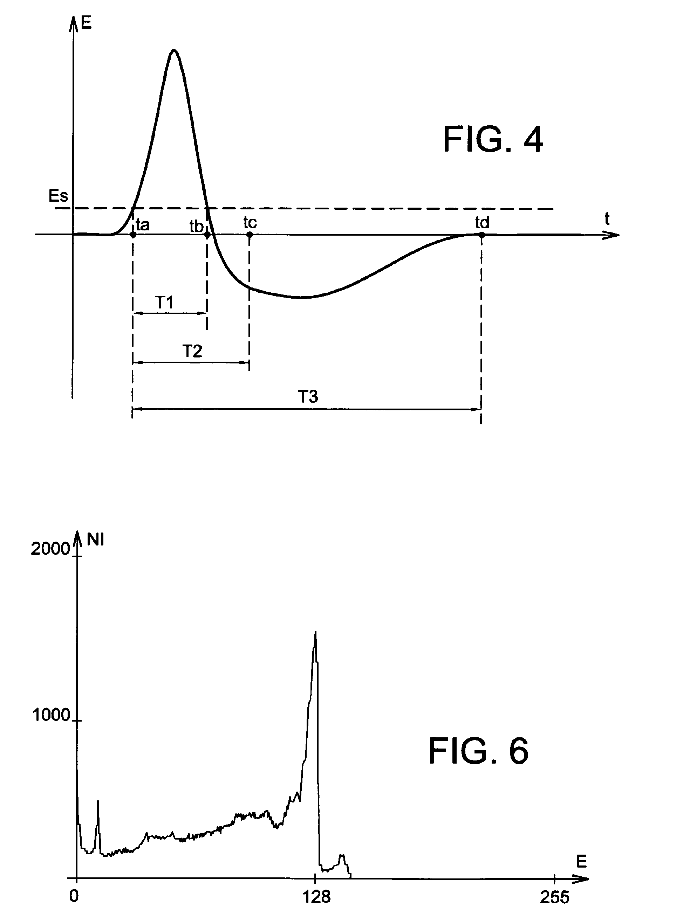

Figure 4 is a typical representation of the signal which enters the real-time electronic circuit 15a.

The curve in Figure 4 represents the energy E of the signal as a function of time t. The energy curve E comprises a positive pulse shaped part and a negative part. The "useful" part of the signal is the positive part. The duration of the positive part is of the order of one microsecond. The negative part, with duration of the order of a few microseconds (typically 3 or 4 $\mu$s) is due to the processing electronics. Several time parameters appear in Figure 4 (ta, tb, tc, td, T1, T2, T3) that will be described in detail in the rest of the description.

Figure 5 represents a detailed diagram of a processing module 21, 22.

A processing module 21, 22 includes several processing channels. Figure 5 only shows a single processing channel composed of a single input amplifier A, a single analogue/digital (A/D) converter, a gain adjustment circuit G for the converter, and of the fraction of programmable logic pulse processing component PROG-I associated with it, for simplicity and to avoid complicating the figure.

The component PROG-I comprises the following function modules:

- a pulse detection and amplitude measurement module 24,
- a stack rejection module 25,
- two energy slot sort modules 26, 28,
- two digital count modules 27, 29 and
- a histogram memory 30.

Apart from the amplification function, the input amplifier A performs an impedance matching function and eliminates the negative part of the received signal (see Figure 4). The analogue/digital (A/D) converter quantifies the signal output by the amplifier A. The gain adjustment circuit G is used to program the converter gain through a VME bus. The converter gain is programmed during the calibration step. The processing module 24 firstly detects the pulses, and secondly measures the pulse amplitude. According to one preferred embodiment of the invention, a pulse energy threshold Es is used for detection (see Figure 4), in order to eliminate noise on the measurement. Pulses for which the energy level is greater than or equal to the threshold Es are accepted, while pulses for which the energy level is lower are eliminated. When a pulse has been accepted, its width T1 is measured (see Figure 4). The starting time from which the width of a pulse is measured is the time ta at which the pulse energy goes above the threshold Es. The time tb at which the pulse amplitude drops below the threshold Es is then used to define the width T1 of the pulse, that is written:

$$T1 = tb - ta$$

A pulse width time threshold tc is used to sort pulses as a function of their width. The maximum pulse width T2 (T2 = tc - ta) may then for example be equal to 1.5 $\mu$s.

The starting time ta from which the pulse width is measured is also the starting point of a programmable time T3 during which any new pulse is not counted. For example, the time T3 may be equal to 5$\mu$s. The programmable time td that limits the time T3 (T3 = td - ta) may for example correspond to the time at which the original pulse, in other words the pulse before elimination of its negative part, returns to approximately zero (see Figure 4).

The stack rejection module 25 rejects any pulse whose width exceeds the pulse width threshold tc, and during a programmed time interval, for example the interval T3, rejects any new pulse if a first pulse has been already detected. Pulses not rejected by the stack rejection module 25 are used and sorted by programmable energy slots (sort module 26). Energy slots may for example be equal to the following values:

- [20 keV - 40 keV[,
- [40 keV - 60 keV[,
- [60 keV - 80 keV[,
- [80 keV - 100 keV[,
- [100 keV - 120 keV[,
- [120 keV - 140 keV[,
- [140 keV - 160 keV[,

- ≥ 160 keV.

Pulses for each energy slot are then counted in the count module 27. For example, in the case in which there are eight energy slots as mentioned above, the count module 27 may include eight 12-bit counters, in other words one counter for each energy slot. Only the counter associated with the energy slot detected for the current pulse is incremented.

Detected pulses that were rejected are also sorted by energy slots such that all detected pulses are also sorted (sort module 28) and counted (count module 29).

The histogram memory 30 is then involved in calibration measurements. The electronic HXR diagnostic circuit is then put into calibration mode.

We will now describe the calibration process. Data acquisition from a known external stimulus (standard source) is started. The histogram memory 30 sorts the signal by calibration energy slot. A calibration energy slot may for example be of the order of 1 keV. Only sorted pulses after stack rejection are included here. Each pulse entering the histogram memory increments one memory cell corresponding to the maximum amplitude of its energy. It is then possible to search for the cell or group of cells in which the largest number of pulses is located. Action on the gain adjustment can then be used to automatically make this maximum coincide with the expected and known energy from the standard source, through the VME bus.

Figure 6 shows an example of the contents of the histogram memory. The abscissa shows the different energy levels E and the ordinate shows the number NI of pulses collected for each energy level.

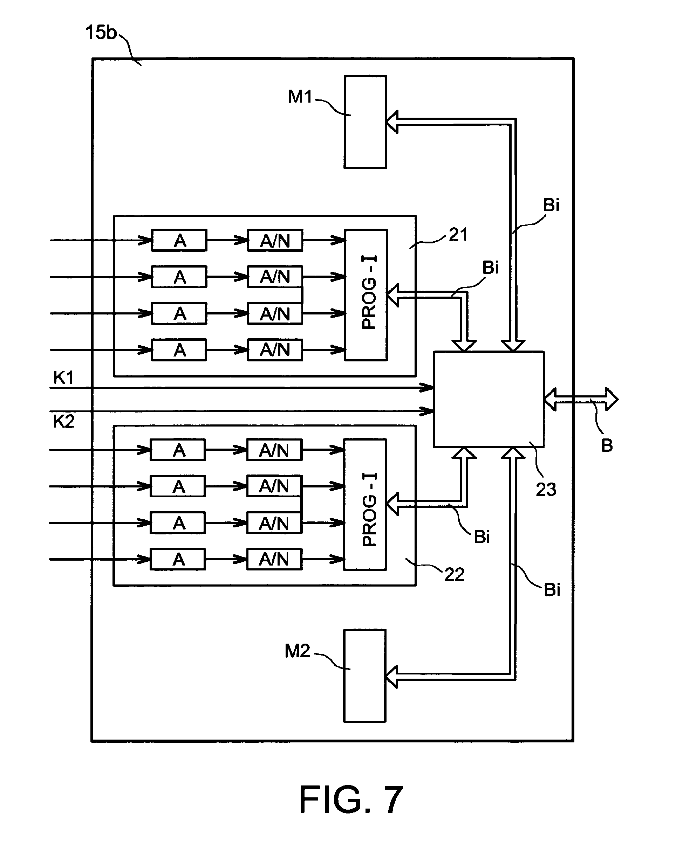

Figure 7 shows an improvement of the real-time electronic circuit 15a.

Apart from the elements described above with reference to Figure 3, the real-time electronic circuit 15b comprises two pull down buffer memories M1 and M2 that receive on their inputs digital data output by processing modules 21 and 22 respectively. A bus Bi connects each pull down memory M1, M2 to the programmable logic interface and control component 23. A command K2 applied to the programmable logic component 23 triggers storage of data output from processing modules 21 and 22 in the corresponding pull down memories M1 and M2. The pull down memories M1 and M2 may for example memorise the history of data output from A/D converters included in the corresponding processing modules 21 and 22 at a rate configurable through the VME bus B, or the history of changes to the states of counters 27, 29 at a rate configurable through bus B, this rate possibly being higher than the basic acquisition rate, so that changes to counters between two acquisitions can thus be observed.

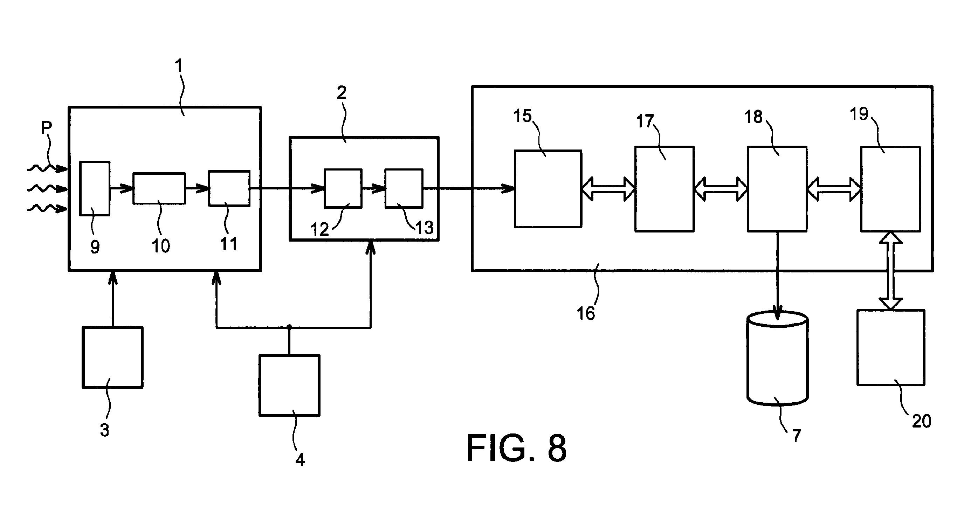

Figure 8 represents an example of spectrometry diagnostic system with associated units which implement the process according to the invention.

The spectrometry diagnostic system comprises a camera 1, a receiver frame 2, a polarization circuit 3, a power supply circuit 4, a data processing circuit 16 and a data storage unit 7. The spectrometry diagnostic system according to the invention is distinguished from a spectrometry diagnostic system according to the prior art by the data processing circuit 16. The data processing circuit according to the invention comprises a real-time acquisition circuit 15 in series with a data acquisition and processing unit 17 and a management unit 18, all in series. The real-time acquisition circuit 15 is, for example, the circuit 15a represented in figure 3 or the circuit 15b represented in figure 7. The processing unit 17 and the management unit 18 implement the process according to the invention. The data processing circuit 16 contains a shared RAM 19 (RAM : Random Access Memory). The shared RAM 19, for example a SCRAMNET card (SCRAMNET: Shared Common Random Access Memory Network) advantageously shares data with other acquisition units through a communication network 20. In particular, the shared RAM 19 reads in real-time the plasma coordinates comprising major radius value Rp, vertical shift Zp and plasma radius "a".

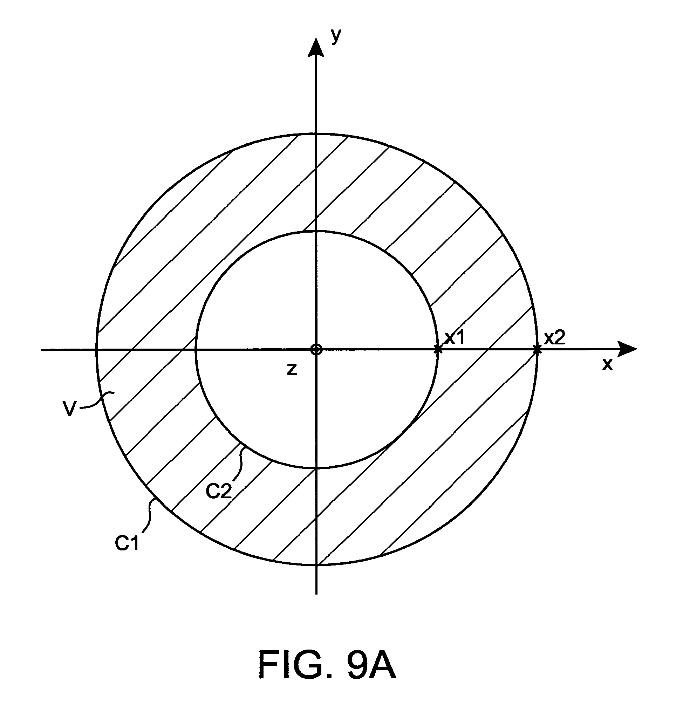

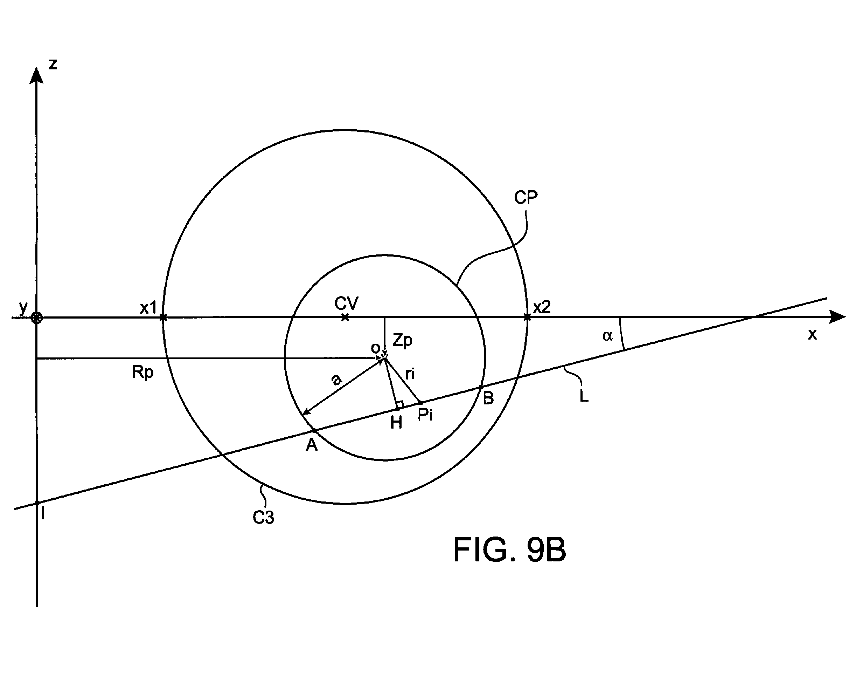

Figure 9A represents a top view of a Tore Supra vacuum vessel placed in an orthonormal base (x, y, z) the centre (0, 0, 0) of which is the centre of the Tore Supra vacuum vessel and figure 9B represents a circular cross section of the Tore Supra vacuum vessel of figure 9A. The circular cross section of the Tore Supra vacuum vessel is contained in the plane (x, 0, z).

The top view of the vacuum vessel shows two concentric circles C1, C2 (see figure 9A) and the circular cross section of figure 9B is made of one circle C3. The x axis cuts circle C3 at points x1 and x2 and the centre coordinates of circle C3 in the orthonormal base (x, y, z) are (Cv, 0, 0). The circular cross section of plasma is a circle CP. Circle CP is off centre against circle C3. The coordinates of the centre O of circle CP in the orthonormal base (x, y, z) are (Rp, 0, Zp). Coordinates Rp and Zp are respectively called "plasma major radius" and "plasma vertical shift". The radius of circle CP, commonly called "plasma minor radius", is "a".

For instance, only one line of sight L is represented in figure 9B. The line of sight L cuts the circumference of circle CP at points A and B. The distance between a point $P_i$ located on the line of sight L and the centre of circle CP is $r_i$. The point in the middle of segment AB is H. The line of sight L cuts z axis at point I. Calling $\alpha$ the angle between the line of sight L and the x axis, the slope T of the line of sight can be defined as $T = \tan(\alpha)$, where "tan" is the tangent and $\alpha$ is with sign (positive or negative according to its position below or above the x axis).

As an example, the process according to the invention is now going to be described in the particular case where the points NL and NM are equally spaced. In order to properly understand the invention, it is first necessary to remind some basic theoretical elements and formulas. The subsequent assumptions have therefore to be done:

a) the description of the method will be done with just one line of sight;
b) the portion of a line of sight L between points A and B is subdivided into NL equally spaced points (according to the preferred embodiment of the invention, NL is between 20 and 30);
c) a normalized plasma radius ρ is subdivided into NM equally spaced points;
d) from c) it comes out that the final profile computed along the normalized plasma radius ρ is subdivided into NM equally spaced points as well;
e) the number of Bessel functions (see below) is NB (according to the preferred embodiment NB is equal to 6).

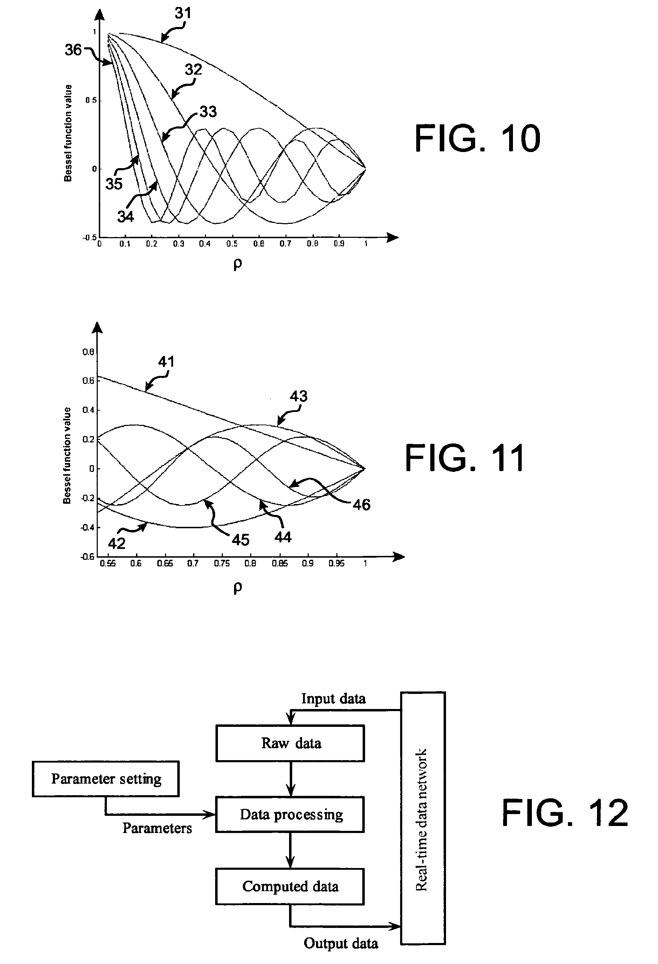

Figure 10 shows, superimposed, the values of NB Bessel functions Jo of order 0 (NB=6), computed along NM equally spaced points of the normalized plasma minor radius ρ multiplied by $Z_i$ (i = 1, 2, ..., NB), the $Z_i$'s being the first NB zeros of the function Jo (31 is Jo($\rho*Z_1$), 32 is Jo($\rho*Z_2$), 33 is Jo($\rho*Z_3$), 34 is Jo($\rho*Z_4$), 35 is Jo($\rho*Z_5$) and 36 is Jo($\rho*Z_6$)). In the algorithm explanation, the matrix containing such values is called $J_\rho$.

Figure 11 shows, superimposed, the values of the NB Jo's whose arguments are the distances $r_i$'s from the geometric centre of the plasma (normalized with respect to the plasma minor radius "a") of the NL points of the portion of the line of sight included in the plasma, multiplied by the NB zeros $Z_i$'s. This picture is similar to the previous one: indeed if the line of sight coincides with the diameter of the circumference (plasma boundary) and if we consider only half the diameter (i.e. the radius "a" ), figure 11 is the same as figure 10 (after having normalized the radius with respect to itself). Due to the symmetry of the distances with respect to the point H (see figure 9B), only half the values are displayed. In the same way as in figure 10, 41 is the curve related to Jo($\rho_i*Z_1$), 42 the curve related to Jo($\rho_i*Z_2$) , and so on ..., up to 46 the curve related to Jo($\rho_i*Z_6$), with i from 1 to NL. In the algorithm explanation, the matrix containing such functions is called $J_{\rho i}$.

These are the formulas from where we start:

$$Y = N \star A_\rho \qquad\qquad (1)$$

$$N = F \star J_\rho^{-1} \star EG \qquad\qquad (2)$$

where:

- the Y's are the raw line-integrated measurements acquired by the camera's detectors (in equation (1), Y is a scalar, since for simplicity sake we are considering just one line of sight);
- Ap is an array, the elements of which represent the local emissivity profile along a normalized plasma radius ρ;
- N is a transfer matrix;
- EG represents the geometrical extension of a detector;
- $J_\rho$ is a matrix of Bessel functions Jo of order 0 computed on the normalized plasma radius ρ (i.e. it varies between 0 and 1);
- F is a matrix whose role is further explained.

In addition to the previous assumptions, also the following ones must be kept in mind:

f) all the length quantities, which are arguments of the Bessel functions, are normalized with respect to the plasma minor radius a;
g) the Shafranov shift, which is the displacement between the plasma geometric centre and the plasma magnetic centre, is negligible and not considered;
h) the local emissivity profile Aρ is approximated with a superposition of NB Bessel functions Jo of order 0.

Assumption g) is important because it allows to avoid the calculation of the distance of each point from the centre of the flux surface to which it belongs (see reference [2]). Indeed this calculation should be done with an iterative method which is quite time consuming, while the calculation of the distance from the geometric centre is quite straightforward. Moreover assumption g) allows to reduce further the calculations, since it introduces a symmetry in the system. By means of this symmetry, the segment AH or the segment HB can be considered instead of AB as it will be further explained.

The calculation of the distances $r_i$'s of the points $P_i$ from the centre is necessary since these are used as arguments of the Bessel functions in order to compute their values along the chords.

A proof that guarantees the possibility of exploiting assumption g) is the following. Let us consider the reconstructed local emissivity profile Ap. From this it is possible to determine the reconstructed line-integrated profile $Y_R$ by means of expression (1):

$$Y_R = N * A_\rho$$

It is then easy to compute the chi-square $\chi^2$ between the raw data Y and the reconstructed measurements $Y_R$. After a test made on several patterns of different pulses, it was seen that on average the $\chi^2$ obtained without considering the Shafranov shift is comparable with the Shafranov shift one: on about 1000 samples from the TS database the $\chi^2$ is 0.00155 in the first case and 0.00157 in the second (please note that the $\chi^2$'s have been computed with normalized profiles).

To exploit assumption h), the NB Bessel functions have to be computed on NB different arguments Args. For example if we consider Args equal to $\rho * Z$, where $\rho$ is the normalized plasma radius, divided in NM points, and Z is an array whose elements are the first NB zeros of the Bessel function Jo of order 0, then:

$$Args = \rho * Z \quad (3)$$

The NB Bessel functions computed on Args are shown in fig. 10, and we decide to consider them as forming the matrix $J_\rho$, whose dimensions are NM * NB. The Z's are the first NB zeros of Jo, in crescent order from 1 to NB (6 in this example).

If we consider A(r/a) to be the local emissivity profile at a generic point P of the plasma at distance r from the plasma center then, due to assumption g), the profile A can be considered to have radial symmetry on the whole poloidal section and, following assumption h), each value of the local emissivity on each point $P_i(r_i/a)$ of the poloidal plane can be thought of as a linear combination of NB values of Bessel functions Jo calculated in $P_i(r_i/a)$. Therefore there are NB linear combination coefficients that are constant on the poloidal plane.

The line-integrated emission measured on a single chord can be expressed as:

$$Y = EG * \int_A^B A(r/a)dr_a \cong EG * \frac{D}{NL-1} * \sum_{i=1}^{NL} A(r_i/a) = EG * \delta' \sum_{i=1}^{NL} A(r_i/a)$$
$$(4)$$

where $\delta' = D/(NL - 1)$ and D is the length of segment AB.

Expression (4) is particularly valid for a reasonably high number of points, as the default value is, and it can be also rewritten (keeping in mind the definition of $A_{\rho i}$) as:

$$Y = \Delta * A_{\rho i} \quad (5)$$

where $\Delta$ is a row matrix of dimensions 1 * N: such that:

$$\Delta = [\delta\ \delta\ .....\ \delta], \text{ with } \delta = \delta' * EG$$

Due to assumption h), we also have that

$$A(r_i \, / \, a) \; = \; \sum_{j=1}^{NB} c_j \; {}^* J_0\big((r_i \, / \, a) \; {}^* \; z_j\big) \; = \; \sum_{j=1}^{NB} c_j \; {}^* J_0(\rho_i \; {}^* \; z_j) \; = \; J(\rho_i) \; {}^* \; C \; , \quad (6)$$

where $J(\rho_i)$ are the values of the NB Bessel functions computed in $\rho_i$; a typical trend of them along a line of sight is shown in figure 11. Here, a value of 1 on the horizontal axis means that $r_i/a = 1$ and so that $J(\rho_i)$ has been computed on the plasma boundary. It can be seen that all the values of $J(\rho_i)$ on the plasma boundary are forced to be 0 (multiplication of $r_i/a = 1$ by the zeros $z_j$'s) and that only the values on half the chord have been computed.

Then, considering that $J_{\rho i}=[J(\rho_1), J(\rho_2), ..., J(\rho_{NL})]$ and, from (5), that $A_{\rho i} = [J(\rho_1)*C, J(\rho_2)*C,..., J(\rho_{NL})*C] = J_{\rho i}*C$, substituting this expression in expression (5) yields

$$Y \; = \; K \; {}^* \; J_{\rho_i} \; {}^* \; C \qquad (7)$$

Considering expressions (4), (5) and (7) it turns out that the values of the array $\Delta * J_{\rho i}$ are nothing but the integrals of $J_{\rho i}$ along a line of sight. The above mentioned array $\Delta * J_{\rho i}$ is what we previously called F. Therefore:

$$Y \; = \; F \; {}^* \; C \qquad (8)$$

From assumption h) we can also write, similarly to expression (6):

$$A_\rho = A(\rho) \; = \; J_\rho \; {}^* \; C \qquad (9)$$

where $A_\rho$ is the profile along p that we are looking for. From expression (9) it turns out that:

$$C \; = \; J_\rho^{-1} \; {}^* \; A_\rho \qquad (10)$$

After having substituted expression (10) in expression (8) the result is the following:

$$Y \; = \; F \; {}^* \; C \; = \; F \; {}^* \; J_\rho^{-1} \; {}^* \; A_\rho \; = \; N \; {}^* \; A_\rho \qquad (11)$$

Remembering that we have already included EG in $\Delta$, i.e. in F, it turns out that expression (11) is nothing but expression (1).

Therefore the unknown local emissivity profile $A_\rho$ is given by:

$$A_\rho \; = \; \frac{J_\rho \; {}^* \; F^{-1}}{EG} \; {}^* \; Y \; = \; M \; {}^* \; Y \qquad 12)$$

where we extracted EG from F.

Actually, expression (12) is not correct because its dimensions must be adjusted. The final expression for the local emissivity profile is therefore:

$$A_\rho \; = \; \frac{J_\rho \; {}^* \; F^{-1}}{EG \; {}^* \; 1000} \; {}^* \; Y \; = \; \frac{M}{1000} \; {}^* \; Y \qquad (13)$$

The way the expression (13) is obtained is given by the following explanations.

The raw line-integrated measurements Y can be defined as the number of photons hitting the detector per unity of energy and of time:

$$Y = \frac{N_{PH}}{E * t} = \frac{number\_of\_photons[\ ]}{energy[eV] * time[s]} \qquad (14)$$

where the quantities in parentheses are the physical dimensions (eV are electron-volts and s are seconds). The local emissivity profile $A_\rho$ can be instead defined as the number of photons hitting the detector per unity of energy, of time, of volume and of solid angle:

$$A_\rho = \frac{N_{PH}}{E*t*V*\Omega} = \frac{number\_of\_photons[\ ]}{energy[eV]*time[s]*volume[mm^3]*solid\_angle[str]} \qquad (15)$$

Here in particular we have that V is in mm³ and $\Omega$ in str (steradiants). Considering expressions (1), (2) and (15), and that EG is in mm²*str, we can write for Y the following expression:

$$Y = \frac{N_{PH}}{E * t} = EG[mm^2] \ [str] * F * J_\rho^{-1}[m] * A_\rho \qquad (16)$$

$F*J_\rho^{-1}$ is in meters, since this quantity is an integral of an adimensional quantity (Bessel functions) along a distance in meters (F), multiplied by an adimensional quantity ($J_\rho^{-1}$). Expression (16) is not dimensionally correct, because keeping in mind expression (15) [mm²] * [m] ≠ [mm³]. Indeed we must have millimeters instead of meters. This is why we must multiply Y by 1000: m*1000 = mm.

It turns out that the final formula for Y is:

$$Y = 1000 * EG * F * J_\rho^{-1} * A_\rho = 1000 * N * A_\rho . \qquad (17)$$

If we compare expression (17) with expressions (1) and (2), we can suppose that in expression (2) the factor 1000 has been included in EG. The final formula for $A_\rho$, on the other hand, is:

$$A_\rho = \frac{J_\rho * F^{-1}}{EG * 1000} * Y = \frac{M}{1000} * Y \qquad (18)$$

Thus formula (18) is identical to formula (13).

The overall scheme of the real-time computation process used to get the local emissivity profile can be seen in fig. 12; five main logic parts form it:

- a real-time data network used to exchange data (communication network 20 in figure 8) ;
- the raw input data;
- the parameters necessary to the process (see below);
- the data processing, which is the core of the real-time process;
- the computed output data.

The output data sent to the real-time network will be then used to achieve the feedback control of the plasma by means of the control system.

The real algorithm, in its turn, can be subdivided into two main parts:

- parameter setting, which is done before each experimental session;
- raw data processing, which allows to get the real-time emissivity profile from previously defined parameters and from raw data coming from the electronic cards.

For the parameter setting part, the following data must be provided by the operator:

- a mask with a selection of the chords to be used (in the case that not all the 59 chords are available);
- the cut-off frequency used to filter the integrated raw data before the data processing, and the threshold used to assess the goodness of the profile by means of the $\chi^2$ computation;
- the minimum number of photon counts/s that is considered acceptable for each chord;
- a flag to select the option to filter the integrated raw data;
- a flag to select the option to compute an average (over a fixed number of time samples) of the input patterns (see below);
- the maximum number of acceptable local maxima of the final computed profile (see below).

For the data processing part, the algorithm can be divided into three main parts:

- the part dedicated to initialize the code at the very beginning of each discharge;
- the part dedicated to compute the SE local emissivity profile which, in its turn, is formed by the following main steps:

    o initialization of the main program variables;
    o reading of input data;
    o data pre-elaboration;
    o change of coordinate center;
    o calculation of chord intercepts with plasma boundary;
    o computation of matrix F;
    o determination of the local emissivity profile $A_\rho$;
    o check of local emissivity profile $A_\rho$;
    o computation of reconstructed integrated data $Y_R$;
    o determination of chi square $\chi^2$ between Y and $Y_R$.

- the part devoted to write the output data.

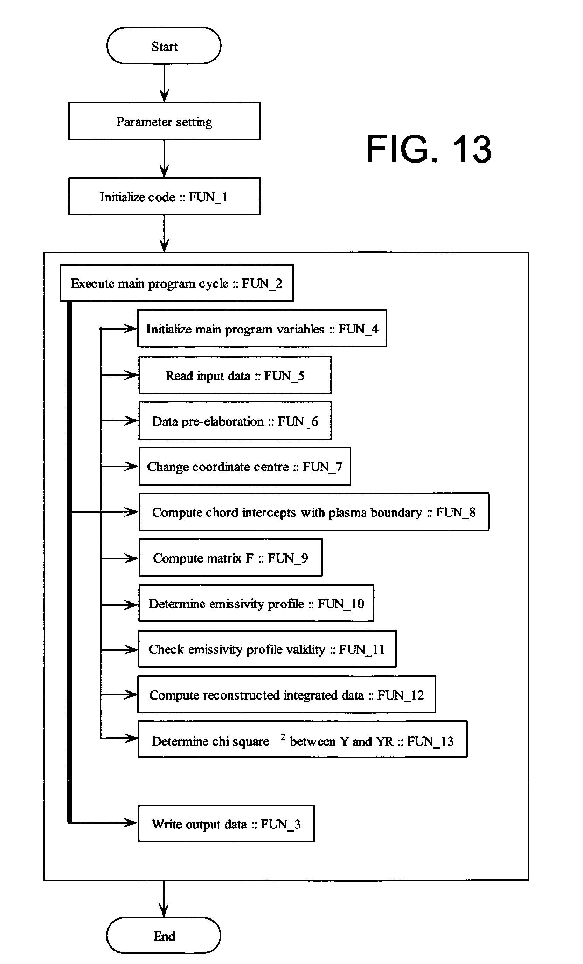

What described just above is presented in Figure 13.

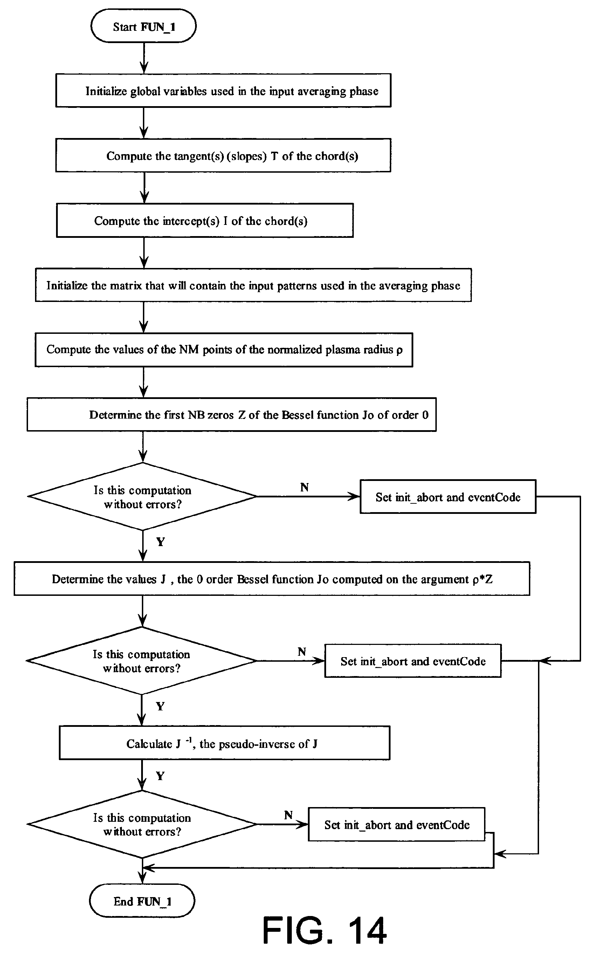

The whole process begins, before the actual execution of a discharge, by changing, if necessary, some parameters, relevant to the process, by means of a graphical interface (even if, once they are tuned, they should not be necessarily changed anymore). These parameters are read by the control system (CS) at the very beginning of a pulse. In the preliminary phase of a pulse the control system arranges also for initializing the main quantities used in the process: this is achieved by invoking FUN_1 (see fig.14). Then, when the discharge actually begins, the CS invokes FUN_2, which is the main routine, executed at every cycle of the control process.

The main body of the algorithm starts by checking if the main initialization phase ended with errors; in this case an event is registered and FUN_2 ends (Cycle Error Procedure - CEP), else it goes on and arranges for initializing the variables used during a cycle (FUN_4). From this point up to the end of the main body of FUN_2 any reference to a CEP call will be omitted, since it is assumed that, except FUN_4, there is an error checking (and so a possible CEP) after the call of every function. The subsequent step is to read the algorithm data from the input buffer (FUN_5); after that, the program has to perform some data pretreatment (FUN_6). Then the change of system coordinate must take place, which in particular acts on the intercepts I of the lines of sight with the axis z (FUN_7). At this point the intercepts $I_P$ of the chords with the plasma boundary can be computed (FUN_8). They are needed to calculate the arguments of the Bessel functions $J_o(\rho_i * Z_j)$ (see fig.11 and expression (6)), whose integrals, computed by means of a standard routine, will constitute the matrix F (FUN_9). But, to determine the profile $A_\rho$, the pseudo-inverse of F, $F^{-1}$, is needed (see expression (13)): this can be computed with a standard pseudo-inversion routine. Now it is possible to compute the profile $A_\rho$ for the current cycle (FUN_10), but then the consistency of the just computed profile must be verified (FUN_11). Having $A_\rho$, it is then possible to determine the reconstructed line integrated measurements $Y_R$ (FUN_12) and to use them in conjunction with Y to work out the chi-square $\chi^2$ between them (FUN_13). This quantity is subsequently used as final assessment to the goodness of $A_\rho$: if also this check has passed, the SE local emissivity profile will be made available to the real-time feedback control. This is done in FUN_3, which forms the writing body of FUN_2, where all the data are arranged in the output buffer in order to be recorded in the database and to be used in the feedback system.

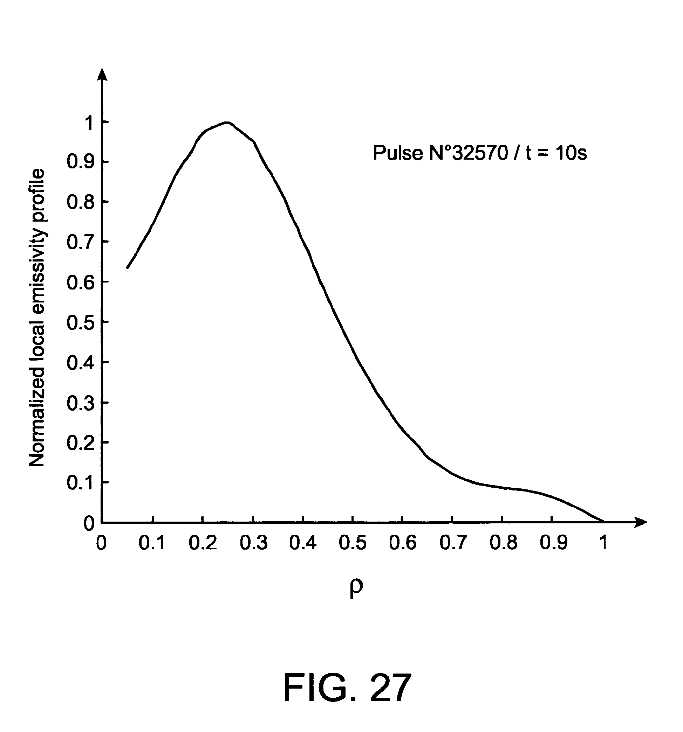

A concrete result of this algorithm can be seen in fig. 27, where the SE local emissivity profile is shown computed from the HXR data of one TS discharge (for example discharge n°32570) at a given time (for example t = 10s).

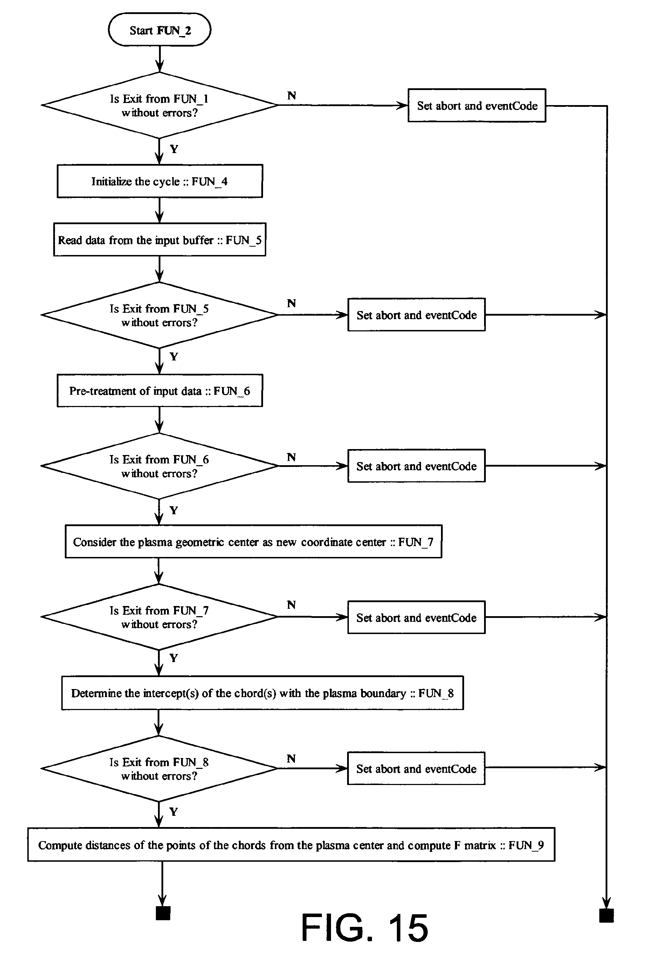

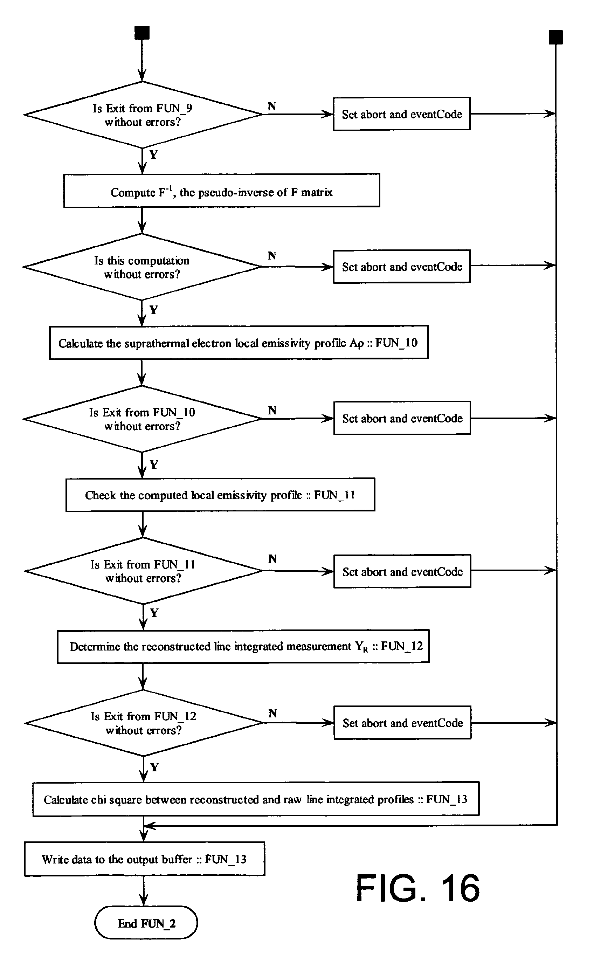

The following part is devoted to the explanation of the code as it has to be implemented on a real-time system. The code is made of 13 functions and is reported from figure 13 to figure 26 under the form of a pseudo-language and using basic flow charts. In the pictures, the functions appear with symbolic names (FUN_N, where N = 1, ..., 13). Apart from fig. 13, each figure shows the flow chart of a function (FUN_2 has been split into figures 15 and 16). Only FUN_4 is not reported: the reason is that this function makes only simple initializations of variables at the beginning of each cycle (i.e. each time FUN_2 is invoked).

The symbolic names are linked to the actual implemented functions in the following way:

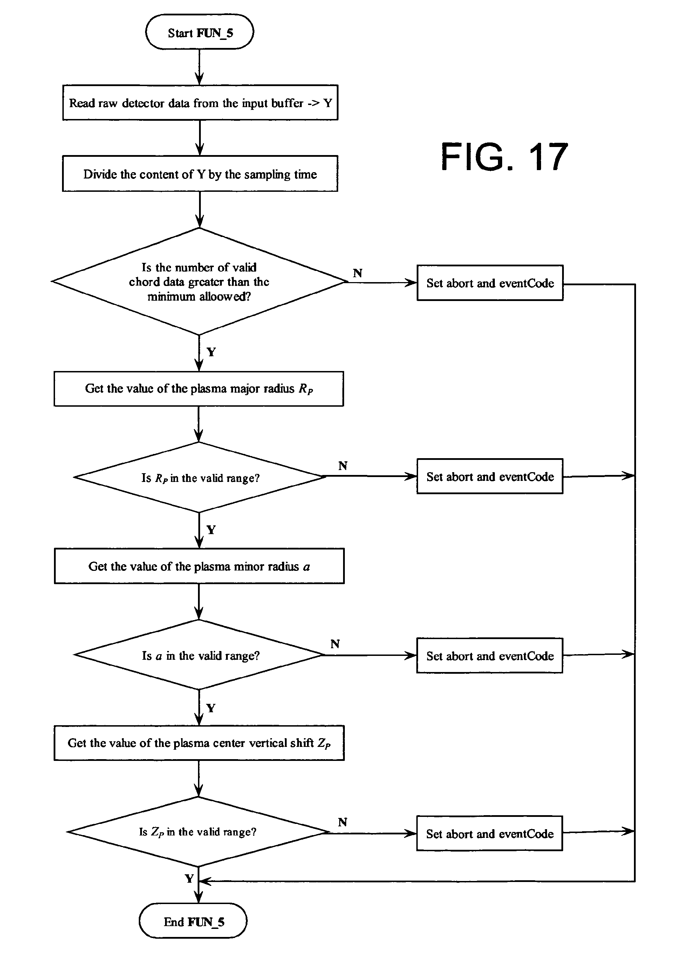

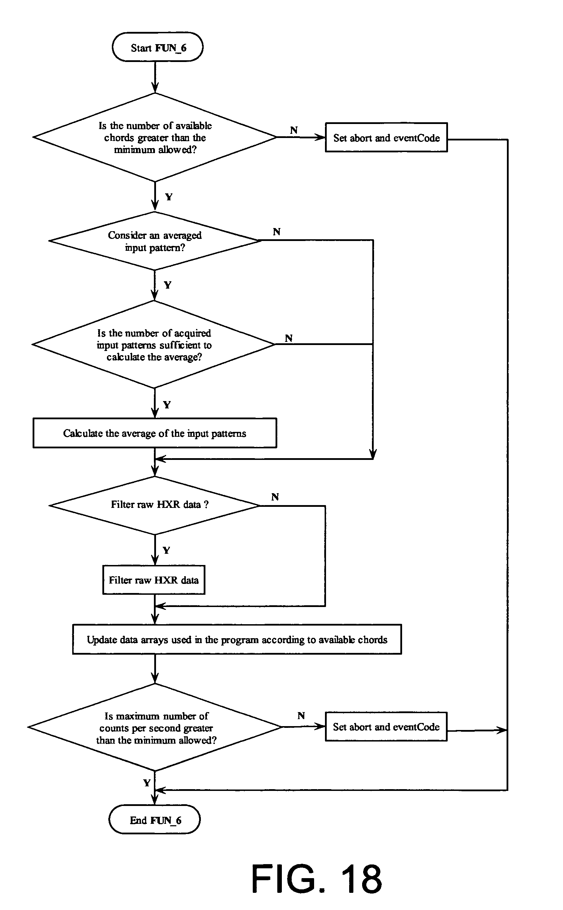

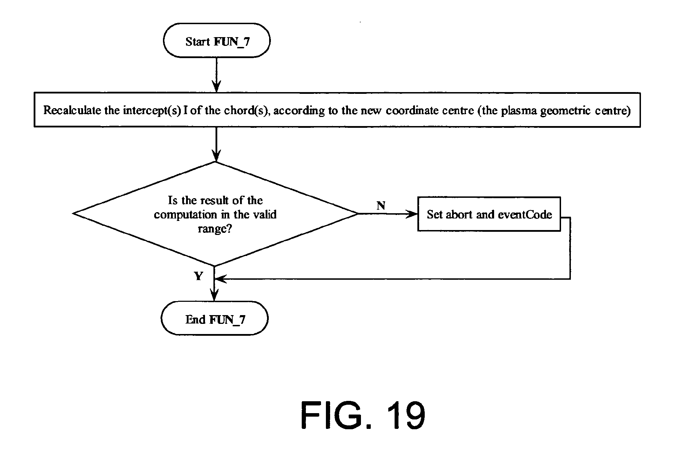

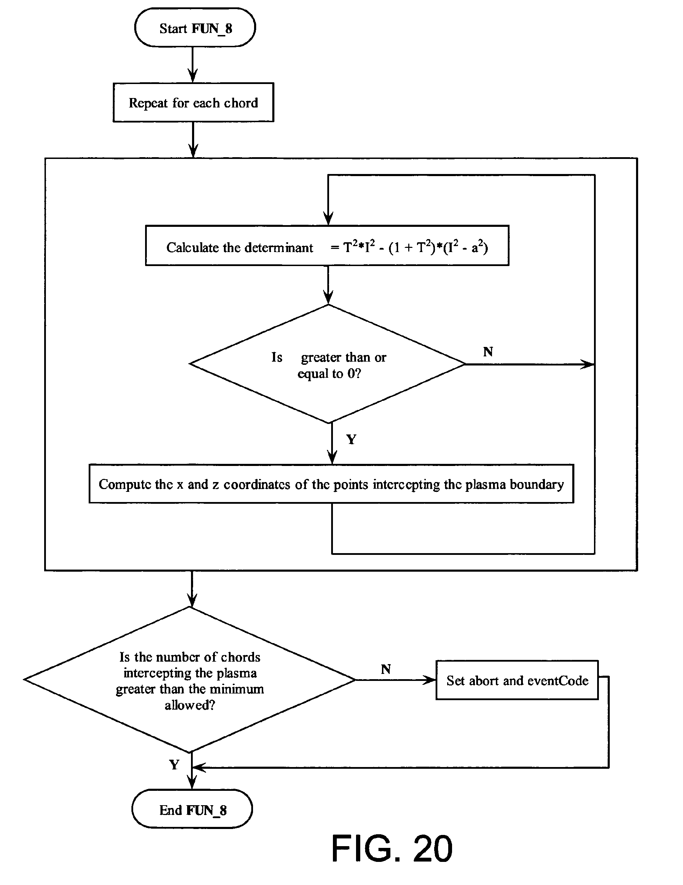

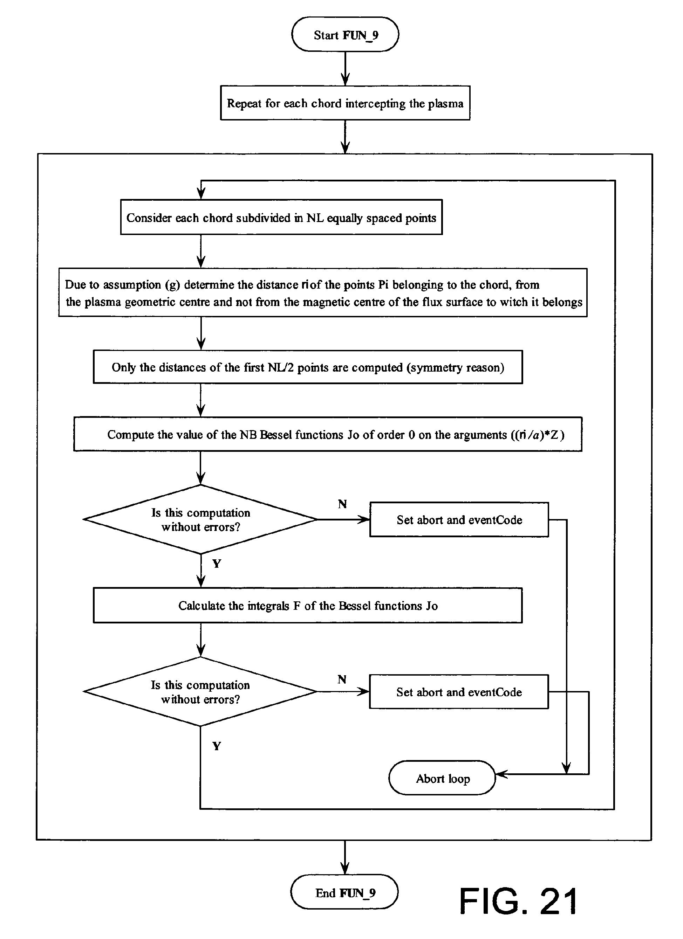

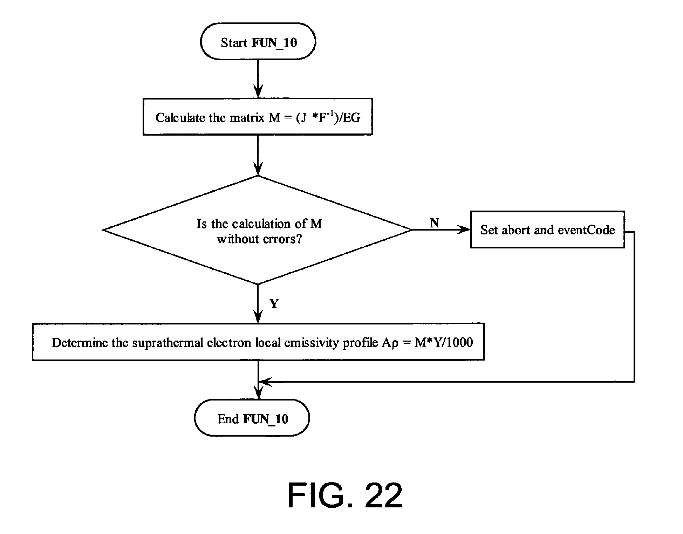

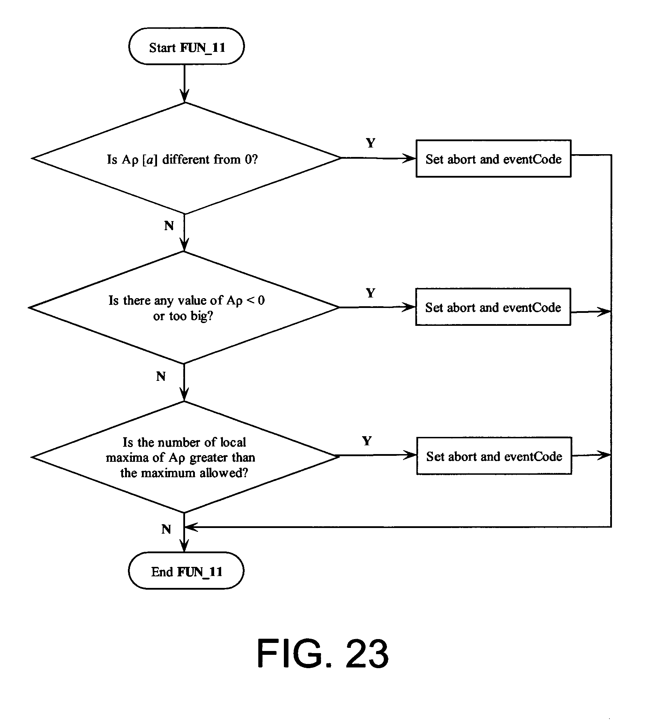

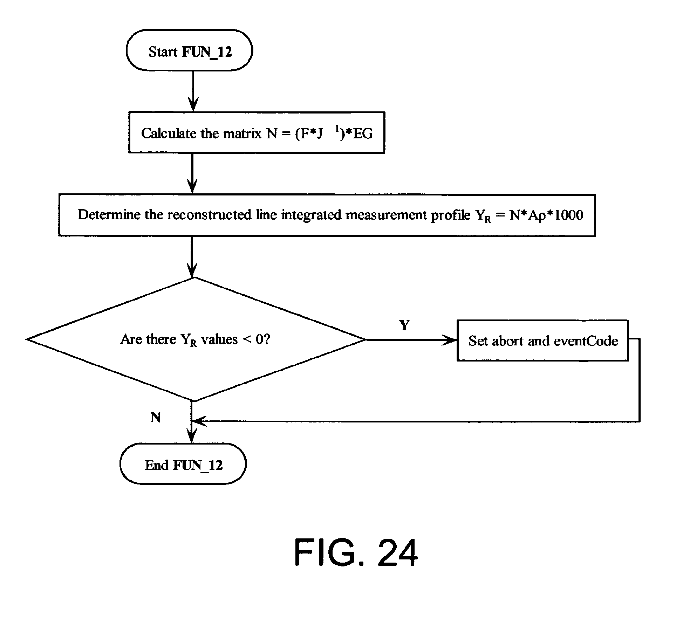

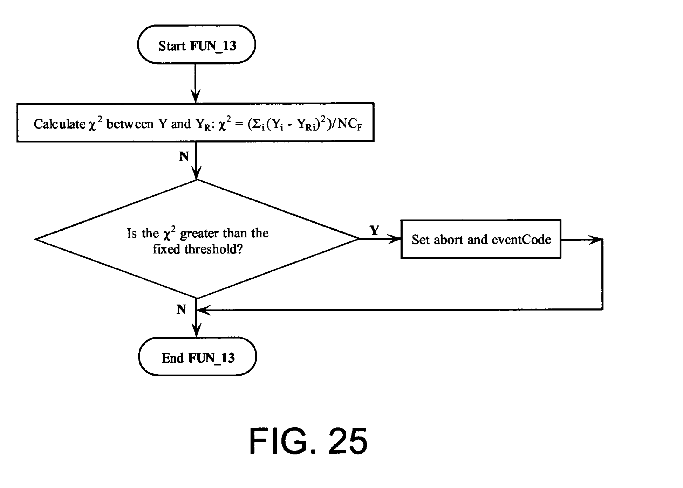

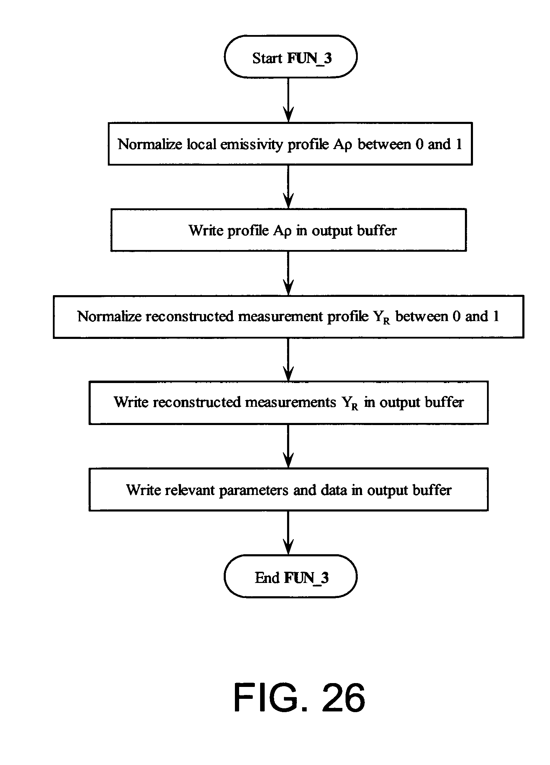

FUN_1 = initSPX (fig. 14);
FUN_2 = calSPX (fig. 15-16);
FUN_3 = writeDataSPX (fig. 26);
FUN_4 = cycleInitSPX (no figure);
FUN_5 = readDataSPX (fig. 17);
FUN_6 = preElaborationSPX (fig. 18);
FUN_7 = newCoordCenterSPX (fig. 19);
FUN_8 = lcfsInterceptSPX (fig. 20);
FUN_9 = computeRFMatricesNoMagSPX (fig. 21);
FUN_10 = computeProfileSPX (fig. 22);
FUN_11 = checkProfileSPX (fig. 23);
FUN_12 = computeIntegratedDataSPX (fig. 24);
FUN_13 = computeChiSquareSPX (fig. 25);

Fig. 12 gives an overview of the real-time computation process: a real-time data network is needed, where to exchange a part of the input data and all the output data. Then the block with the raw input data is highlighted: it contains both the raw HXR data supplied by the spectrometric diagnostics and the data related to the geometry of the plasma. The raw data are used of course as input by the algorithm during the real-time data processing phase, but before, at the very beginning of each discharge, there is the phase in which it is possible to change some algorithm parameters: for example it is possible to modify the chords with which the SE local emissivity profile is computed. At last, the block with the computed output data is highlighted.

Fig. 13 gives a global view of the algorithm and shows all its basic steps. In the first step some fundamental algorithm parameters are written into the memory of the hardware by means of a graphical interface before the actual execution of the main parts of the code, i.e. before a plasma discharge. The second step represents the code initialization phase before a plasma discharge, and it is explained in figure 14. The third step is the main part of the algorithm, the one executed every cycle of the real-time control process (it is analyzed in detail in figures 15 and 16). This can be divided into 2 parts: one devoted to the computation of the SE emissivity profile, the other devoted to write the output data that will be used for the feedback control (fig. 26). The part devoted to the computation of the profile, in its turn, can be subdivided into several branches, each of which performs a different task: initialization of main program variables, reading of input data (fig. 17), data pre-elaboration (fig. 18), change of coordinate centre (fig. 19), calculation of chord intercepts with plasma boundary (fig. 20), determination of integrals of Bessel functions along the chords (matrix F - fig. 21), determination of the SE local emissivity profile (fig. 22), check of emissivity profile (fig. 23), determination of reconstructed integrated data $Y_R$ (fig. 24), computation of chi square $\chi^2$ between Y and $Y_R$ and final assessment of the local emissivity profile (fig. 25).

In figure 14, FUN_1 is shown and this is what is called initSPX in the code. This is the function, called before a discharge, needed to initialize some important quantities. At its beginning some global variables used in the input averaging phase (see figure 18) are set to 0. Then, supposing that each line of sight represents a straight line, the chord tangents T (slopes) and interception points I are computed. Indeed, these quantities are needed to calculate the interception points of the chords with the plasma boundary and consequently the distances of their points from the plasma geometric center (see also figures 9A/9B). For the averaging phase a store matrix is needed to keep data from the last N_AV patterns (see fig. 18 for an explanation of the averaging phase). The next steps are to calculate the values of the NM points of the normalized plasma radius $\rho$ (assumption c)) and the computation of the first NB zeros of the Bessel function Jo of order 0. Indeed, these zeros are needed to prepare the arguments for $J_\rho$ (see expression (9) and figure 10) and $J_{\rho i}$ (see expression (6) and figure 11). If this computation is with errors, then an abort_from_initialization flag is set to 1, the event is registered and the execution of FUN_1 ends (initialization error procedure - IEP), otherwise the next step is the computation of $J_\rho$. This is done in the initialization phase since this matrix is constant throughout all the pulses. If this computation is with errors, then the IEP is executed, otherwise $J_\rho^{-1}$, a (constant) matrix that is necessary to compute the reconstructed line measurements $Y_R$ (see expressions (2) and (11)), is computed. If this caused any error then IEP is executed, otherwise FUN_1 terminates without errors.

Figure 15 displays the first part of FUN_2, which is the main routine of the whole process, in the sense that all the subroutines necessary for the determination of the SE local emissivity profile are invoked by it. If the exit from FUN_1 was with no errors, this function is executed every cycle.

FUN_2 can be divided into two parts: the first one concerns the calculation of the SE emissivity profile and of the quantities related to it (main body); the second one has to do with the writing of the output data (writing body). While the main body may or may not be executed, or just may be partly executed, the writing body is always executed. FUN_2 actually starts checking the abort_from_initialization flag and, if this is equal to 1, it sets to 1 the abort_cycle flag too, it registers the event and it ends the main body (cycle error procedure - CEP). Instead, if the exit from FUN_1 was good, there is the first step of the main body for the computation of the emissivity profile, i.e. the initialization of the parameters that are renewed every cycle, like for example the array containing the raw data acquired by the diagnostics (FUN_4). Since FUN_4 cannot give errors, straight after it there is the reading of the raw data (FUN_5), which includes the HXR ones, the plasma major and minor radii ($R_P$ and a) and the plasma vertical shift $Z_P$. From this point onwards, each function call in figure 15 can give raise to a CEP, so this issue will not be considered anymore in this paragraph. After the FUN_5 call, the next step is to pre-elaborate the HXR raw data (FUN_6). The main purpose of the latter function is to filter the raw data, in order to decrease the side effects due to noise. It is then time to consider the shift of the coordinate system centre from (Cv, 0, 0) to the plasma geometric center (Rp, 0, Zp) (FUN_7) and to determine the interception points of the lines of sight with the plasma boundary (points A and B in figure 9B). This is achieved with FUN_8, whose rationale will be discussed below. The final step of FUN_2 (concerning figure 15) is to compute the F matrix (see expression (8)) by means of FUN_9.

Figure 16 reports the second part of FUN_2. Also here each function of the main body can cause a CEP. After the computation of F, its pseudo-inverse, $F^{-1}$ (see expressions (12) and (13)), must be computed. Then all the instruments to determine the SE local emissivity profile are available and so FUN_10 is invoked. The just computed emissivity profile must be analyzed, to check its goodness, and this is the aim of FUN_11, while purpose of FUN_12 is to determine the reconstructed line measurements $Y_R$. This quantity can then be compared with Y (FUN_13) in order to supply a further check on the goodness of the emissivity profile. After FUN_13 the main body of FUN_2 ends; independently of the outcome of FUN_13 (either with CEP or not), the routine FUN_3 of the writing body is called, whose aim is to write all the useful data to the output buffer.

The first important operation executed in FUN_2, after the initialization of cycle variables by FUN_4, is the reading of algorithm data from the input buffer. This is the duty of FUN_5, whose flow chart is shown in fig. 17. At first the code gets the raw detector data from the input buffer and puts them in Y. At this point Y contains the number of counts acquired in a sampling period, but what is important is the number of counts per second (counts/s), so the second step is to update Y dividing the raw detector data by the sampling time dT. If the number of chords whose value is good for computation is less then a fixed minimum, decided a priori, the function calls a CEP, otherwise FUN_5 goes on and reads the values of the current plasma major and minor radii (respectively $R_P$ and a) and of the plasma vertical shift $Z_P$. After the acquisition of each of the three parameters, there is a check on if their value is within the validity range; if this is not the case, a CEP is executed. The function ends with the check on $Z_P$.

The step after reading data from the input buffer is filtering the detectors' raw signals, in order to avoid problems due to statistical noise. This is the purpose of FUN_6 (see figure 18), where the solution consists either a) in averaging the inputs or b) in filtering the raw data with a low-pass filter. Both operations are not mandatory and their execution can be decided by setting, before a discharge, two proper flags during the already mentioned parameter setting phase.

Anyway, FUN_6 must also check that the number of currently used chords is greater than the minimum allowed (the minimum allowed number of chords MNC is a value embedded in the code), and this is the first operation executed in it. If this is not true, the function executes a CEP, otherwise FUN 6 checks the flag for the averaging phase.

The averaging phase is executed if its flag is 1; it consists in averaging a certain number NIP of input patterns (this number is embedded in the code and it depends mainly on the dynamics of the physical processes and on the hardware sampling time). If the number of already acquired patterns is equal to or greater than NIP, the average is computed and as raw data the averaged ones are used; otherwise the program goes on with its calculation without computing any average and using the not averaged raw data of the current sample.

The function examines the second flag, the one that should allow phase b) to be executed, at the end of the first phase or if the first flag is 0. If the flag for the "filtering raw data" phase is 1, this operation is executed exploiting a low-pass filter whose cut-off frequency can be modified in the parameter setting phase.

The program goes on updating the data arrays used, according to the available chords. The final check is on the current maximum number of counts/s (useful for a reliable inversion): if it is less than the minimum allowed (also this number is set during the parameter setting phase), FUN_6 invokes a CEP, otherwise it ends without errors.

Following assumption g) and considering the adopted procedure for the determination of the SE local emissivity profile, it turns out that Ap is circularly symmetric with respect to the plasma geometric center. This, together with the fact that the geometric centre of the plasma does not necessarily coincides with the center of the vacuum vessel as already mentioned earlier, leads us to the need of adopting a coordinate system centered in the plasma geometric center.

Purpose of FUN_7, shown in fig. 19, is then to change the algorithm quantities that depend on the system coordinate, in order to make them consistent with the new coordinate system that will be considered from this point on and whose center is $(R_P, 0, Z_P)$.

Actually, the only quantity useful for the following calculations and that needs to be recomputed regards the intercepts of the chords with the z axis. After this has been done, FUN_7 checks if the result of the previous computation falls in a numerical meaningful range. If this is the case, the function terminates without errors, otherwise a CEP is invoked.

FUN_8, whose flow chart can be seen in fig. 20, is used to determine the intercepts A and B of the chords with the plasma boundary. Indeed, from the knowledge of these points it is then possible to compute the quantities $r_i$ (see figure 9B), and consequently $J_{\rho i}$ and F (expressions (6) and (7)). The intercepts A and B are computed, for each chord, solving the following system of equations:

$$x^2 + z^2 = a^2 \qquad\qquad (19)$$

$$z = Tx + I \ . \qquad\qquad (20)$$

with T and I as previously defined.

Expression (19) holds for the plasma boundary and expression (20) holds for a line of sight. The 2nd grade equation, function of x, which derives from the previous system is the following:

$$(1 + T^2)x^2 + 2TIx + I^2 - a^2 = 0 \ . \qquad\qquad (21)$$

Its x solutions are given by:

$$x_{1,2} = \frac{-TI \mp \sqrt{\mathrm{Det}}}{1 + T^2}, \qquad\qquad (22)$$

where Det is the determinant

$$\mathrm{Det} = (TI)^2 - (1 + T^2)(I^2 - a^2) \qquad\qquad (23)$$

The z solutions can then be determined by expression (20).

FUN_8 repeats the following operations for each available chord: it computes the determinant by means of expression (23); if Det is greater than or equal to 0, this means that the line of sight is at least tangent to the plasma boundary, and so that there is at least a solution to expression (22); if there is at least a solution to expression (22), this is computed using expressions (22) and (20), otherwise the function checks the next chord. At the end of this cycle, FUN_8 verifies if the number of chords intercepting the plasma is greater than MNC: if this is not the case a CEP is issued, else the function ends with no errors.

Fig. 21 describes FUN_9, the function used to compute the matrix F. FUN_9 executes a loop, based on the number of available chords that remained after invoking FUN_8. At the beginning of each iteration the current portion of line of sight comprised in the plasma (whose extremes have been computed by FUN_8) is subdivided into NL points $P_i$. After that, and following assumption g), the distance $r_i$ of each of points Pi from the plasma geometric center O is computed. If the points are equally spaced, actually, for symmetry reason, only the distance of the first NL/2 points - (for example those belonging to segment AH in fig. 9B) is computed. Having the $r_i$'s it is then possible to determine $J_{\rho i}$ (see figure 11 and its caption). If this computation is with error, a CEP is invoked, the loop is aborted and the function terminated, else FUN_9 determines the integral F. If this computation is with errors, a CEP is invoked, the loop is aborted and the function terminates, else FUN_9 jumps to the following iteration.

Figure 22 shows the steps of FUN_10, the function that computes the SE local emissivity profile Ap. This function is basically simple: at first it determines the matrix M (see expression (13)); then, if the former calculation returned with errors, a CEP is invoked and the function is ended, otherwise the profile Ap is computed by means of expression (13).

After the profile Ap is computed, it must be checked in order to see if it is a good one and it is reliable to use it for real-time purposes. Indeed, notwithstanding the preliminary phase of signal conditioning, the raw Y measurements could still present bad values coming from either hardware or software faults, that lead to a wrong calculation of $A_\rho$. FUN_11's duty is to check the profile $A_\rho$, and its flow chart is shown in figure 23. It is made of three segments and invokes a CEP if the examined feature is not satisfying. The checks are the following (it is worth mentioning that the last check was derived from empirical analyses):

-1) Is the value of $A_\rho$ on the boundary different from 0? [indeed, all the Bessel functions used in expression (9) are 0 on the plasma boundary - see also figure 10 - therefore any combination of them must be 0 in that point];
-2) Is there any value of Ap < 0 or too big? [the SE local emissivity profile is a positive physical quantity which, therefore, cannot be less than 0];
-3) Is the number of local maxima of Ap greater than the maximum allowed NLM? [NLM typically is equal to 4 and is a number that can be modified during the parameter setting phase];

Actually, the previous assessments of Ap are just the first step of a crosscheck process. The second step consists in evaluating the chi-square $\chi^2$ between Y and the reconstructed line integrated measurements $Y_R$ (see figure 25). Therefore, after the profile has been checked and it proved to be reliable, the reconstructed line integrated measurements $Y_R$ have to be computed from Ap. This is the purpose of FUN_12, which is shown in figure 24. At first there is the determination of the matrix N (see expressions (2) and (11)); then the measurements $Y_R$ are computed by means of expression (17). If $Y_R$ presents any value less than 0, then the function issues a CEP and terminates, otherwise it ends without errors. The reason for invoking a CEP is simply due to the fact that $Y_R$ reproduces a positive physical quantity and so it cannot be less than 0.

The flow chart of FUN_13 is shown in figure 25. This function computes the aforementioned $\chi^2$ between Y and the reconstructed line integrated measurements $Y_R$ ($NC_F$ is the final number of chords used to determine Ap). After that, FUN_13 compares $\chi^2$ with a threshold, whose value can be modified during the parameter setting phase. If $\chi^2$ is greater than the threshold, the consequence is to discard the current Ap for the real-time purposes and to issue a CEP. It is worth noting that the $\chi^2$ is computed after having normalized to 1 both Y and $Y_R$.

With the call of FUN_13 the main body of FUN_2 terminates (see figure 16) and basically at this point all the computations strictly related to the algorithm for the determination of Ap can be considered concluded.

After the main body of FUN_2 has been executed, the resulting and most relevant data must be written in the output buffer in order to store them in a database and/or use them for real-time purposes. This is achieved by FUN_3 (see figure 26), which is the only function of the writing body of FUN_2 (see also figure 16).

The first step is to normalize Ap between 0 and 1, since a normalized SE local emissivity profile is sufficient for the real-time control algorithm. Then the profile Ap is written in the output buffer both for recording in the database and for use in the real-time control. It is worth noting that if a CEP was issued before calling FUN_10, then the values of Ap written in the output buffer are those coming from FUN_4. The same procedures apply to the reconstructed line measurements $Y_R$. At last, other relevant parameters, like the abort_cycle flag, the chi-square $\chi^2$ and the CEP event number, are sent to the output buffer. The abort_cycle flag is particularly important among them to check the profile validity: a value 0 for this flag means that the current SE local emissivity profile can be used for the feedback control, while a value 1 means that the current profile is not exploitable. In the latter case, the last valid SE local emissivity profile, obtained within a fixed time interval depending on physical issues ($\approx$ 100ms), is sent to the control system. If no valid profiles are available within this time interval, then an appropriated procedure for the pulse termination, out of the scope of this patent, is performed.

Figure 27 represents an example of the SE local emissivity profile that was worked out, by the adopted inversion method, with the HXR data of one TS discharge (discharge n°32570) for a given time (t = 10s).

Cited References

[1] "Tomography of the fast electron bremsstrahlung emission during lower hybrid current drive on TORE SUPRA", Y. Peysson and Frédéric Imbeaux, , Rev. Sci. Instrum. 70 (10), 1999, pp. 3987-4007.
[2] "Tokamaks" J. Wesson, Clarendon Press (Oxford), 1997, pp. 108-121.

**Claims**

**1.** Process for determining a local emissivity profile of suprathermal electrons coming from an ionized gas ring, called plasma, placed in a toric vessel, with the use of a spectrometric system comprising at least one detector, the detector being positioned in relation with the toric vessel so that the line of sight of the detector intercepts a circular cross section of the toric vessel and a circular cross section of the ionized gas ring with radius "a", said circular cross section of the ionized gas ring being off centre against said circular cross section of the toric vessel, **characterized by** the following steps:

- to compute the first NB zeros $Z_1, Z_2, ..., Z_{NB}$ of the Bessel functions Jo of order 0,
- to build a matrix $J_\rho$, the element of row k and column j of which is Jo($\rho_k * Z_j$) , with Jo($\rho_k * Z_j$) being the function Jo of order 0 on arguments ($\rho_k * Z_j$) (k=1, 2, ..., NM and j=1, 2, ..., NB), with $\rho_k$ the normalized distance with respect to radius "a" between a point $P_k$ of the plasma and the plasma centre, the matrix $J_\rho$ being such that:

$$A_\rho = J\rho * C,$$

with $A_\rho$ being an array, the elements of which represent the emissivity profile along a normalized plasma radius $\rho$ and C being a matrix of coefficients,
- to read measurement data, said measurement data comprising a plasma emissivity datum Y representing the plasma integrated emissivity measured by the detector along the line of sight, plasma centre coordinates comprising major radius value Rp , vertical shift value Zp and plasma minor radius "a",
- to compute the geometrical position of the line of sight segment which intercepts the cross section of the ionized gas ring with respect to a coordinate system centred in (Rp, 0, Zp),
- to compute the position of NL successive points $P_1, P_2, ..., P_{NL}$ on said line of sight segment, $P_1$ and $P_{NL}$ being the points of said line of sight segment which intercept boundaries of the ionized gas ring cross section,
- to compute the distances $r_i$ between the points $P_i$ (i=1, 2, ..., NL) and the plasma centre and to computate the normalized distances $\rho_i = r_i/a$,
- to build a matrix $J_{\rho i}$, the element of row i and column j of which is Jo($\rho_i * Z_j$), with Jo ($\rho i * Z_j$) being the function Jo of order 0 on arguments $\rho_i * Z_j$ (i=1, 2, ..., NL and j=1, 2, ..., NB), the matrix $J_{\rho i}$ being such that:

$$A_{\rho i} = J_{\rho i} * C,$$

with $A_{\rho i}$ being an array representing the emissivity profile along the normalized distances $\rho_i$ and C being said matrix of coefficients,
- to compute for each column j of $J_{\rho i}$, (j=1, 2, ..., NB) integral $F_j$ such that:

$$F_j = \delta * \Sigma_i \, Jo(\rho_i * Z_j)$$

where $\delta$ is a geometric constant and i goes from 1 to NL,
- to compute a matrix F such that:

$$F = [F_1 \; F_2 \; ... \; F_{NB}]$$

- to compute a matrix $F^{-1}$, the pseudo-inverse matrix of matrix F,
- to compute a matrix M such that:

$$M = (J_\rho * F^{-1})/EG$$

with EG being the geometrical extension of the detector,
- to calculate the suprathermal electron local emissivity profile array $A_\rho$ such that:

$$A_\rho = M * Y/1000$$

2. Process according to claim 1, **characterized in that** it comprises a checking step to check the elements of the array $A_\rho$, said checking step comprising at least one of the following steps:

- a) checking if the element of the array $A_\rho$ which represents the local emissivity profile on the ionized gas ring circumference is different from zero,
- b) checking if any element of the array $A_\rho$ is negative or a value superior to a threshold value,
- c) checking if the number of local maxima of the array $A_\rho$ is greater than a maximum number allowed.

3. Process according to claim 1 or 2, **characterized in that** it comprises:

- computation of $(J_\rho)^{-1}$ the pseudo-inverse matrix of matrix $J_\rho$,
- computation of a matrix N such that:

$$N = (F * (J_\rho)^{-1}) * EG,$$

- computation of the reconstructed line integrated measurement $Y_R$ corresponding to the integrated plasma emissivity datum Y such that:

$$Y_R = N * A_\rho * 1000$$

- computation of value $\chi^2$ such that:

$$\chi^2 = \sum_{n=1}^{NC_F} (Y_n - Y_{Rn})^2 / NC_F$$

with $Y_n$ being the integrated plasma emissivity datum representing the integrated plasma emissivity measured by a detector of rank n, $Y_{Rn}$ being the reconstructed line integrated measurement corresponding to the plasma emissivity datum $Y_n$ and $NC_F$ being the number of detectors
- checking if $\chi^2$ is greater than a fixed threshold value.

4. Process according to claim 3, **characterized in that**, before the computation of value $\chi^2$, it comprises a step for checking if at least one element of the array $Y_R$ is negative.

5. Process according to claim 4, **characterized in that**, if at least one element of the array $Y_R$ is negative, the process stops or it continues if not.

6. Process according to claim 3, **characterized in that**, if $\chi^2$ is greater than a fixed threshold value, the process stops or it continues if not.

7. Process according to any of the previous claims, **characterized in that**, if the points $P_i$ are equally spaced, the computation of the distances $r_i$ between points $P_i$ (i=1, 2, ..., NL) and the plasma centre is only made for the points $P_i$ located between $P_1$ and the middle of segment $P_1P_{NL}$, $P_1$ being included, or located between the middle of segment $P_1P_{NL}$ and $P_{NL}$, $P_{NL}$ being included.

8. Process according to any of the previous claims, **characterized in that** it comprises an averaging phase to calculate said measurement emissivity datum Y in the form of raw integrated emissivity data computed along a prefixed number of consecutive time samples.

9. Process according to any of the previous claims, **characterized in that** it comprises a step to filter raw measurement data.

10. Process according to any of the previous claims, **characterized in that** it comprises a preliminary step to compare a number of available lines of sight to a minimum value allowed, so that the process stops if said number of available line of sights is lower than said minimum value allowed.

11. Process for real-time determination of the local emissivity profile of suprathermal electrons coming from a ionized gas ring, called plasma, placed in a toric vessel, said process comprising:

 - reading of at least one real-time measurement Y of integrated plasma emissivity along a line of sight of at least one detector positioned in relation with the toric vessel so that the line of sight of the detector intercepts a cross section of the toric vessel and a cross section of the ionized gas ring with radius "a"
 - real-time reading of the plasma centre coordinates comprising major radius value Rp, vertical shift value Zp and plasma minor radius "a",
 - real-time determination of the local emissivity profile based on a process according to any of claims 1 to 10.

**Patentansprüche**

1. Verfahren zum Bestimmen eines lokalen Emissivitätsprofils von suprathermischen Elektronen, die einem Plasma genannten ionisierten Gasring entstammen, der in einem torischen Behälter angeordnet ist, unter Verwendung eines spektrometrischen Systems, das wenigstens einen Detektor umfasst, wobei der Detektor in Bezug auf den torischen Behälter derart angeordnet ist, dass die Sichtlinie des Detektors einen kreisförmigen Querschnitt des torischen Behälters und einen kreisförmigen Querschnitt des ionisierten Gasringes mit dem Radius "a" schneidet, wobei der kreisförmige Querschnitt des ionisierten Gasringes exzentrisch gegenüber dem kreisförmigen Querschnitt des torischen Behälters ist, **gekennzeichnet durch** die nachfolgenden Schritte:

 - Berechnen der ersten NB Nullstellen $Z_1$, $Z_2$, ..., $Z_{NB}$ der Bessel-Funktionen Jo der Ordnung 0;
 - Erstellen einer Matrix $J_\rho$, deren Element der Zeile k und der Spalte j gleich Jo $(\rho_k \cdot Z_j)$ ist, wobei Jo $(\rho_k \cdot Z_j)$ die Funktion Jo der Ordnung 0 in Abhängigkeit von den Argumenten $(\rho_k \cdot Z_j)$ (k = 1,2, ..., NM und j = 1,2, ..., NB) ist, $\rho_k$ der normierte Abstand in Bezug auf den Radius "a" zwischen einem Punkt $P_k$ des Plasmas und der Plasmamitte ist, die Matrix $J_\rho$ derart gewählt ist, dass gilt:

$$A_\rho = J\rho \cdot C$$

wobei $A_\rho$ ein Feld ist, dessen Elemente das Emissivitätsprofil entlang eines normierten Plasmaradius $\rho$ darstellen, und C eine Koeffizientenmatrix ist;

 - Lesen von Messdaten, wobei die Messdaten ein Plasmaemissivitätsdatum Y umfassen, das die integrierte Plasmaemissivität darstellt, die von dem Detektor entlang der Sichtlinie gemessen wird, Plasmamittenkoordinaten, die einen Hauptradiuswert Rp, einen Vertikalversatzwert Zp und einen Plasmanebenradius "a" umfassen;
 - Berechnen der geometrischen Position des Sichtliniensegmentes, das den Querschnitt des ionisierten Gasringes in Bezug auf ein Koordinatensystem schneidet, dessen Mitte bei (Rp, 0, Zp) liegt;
 - Berechnen der Position von NL aufeinanderfolgenden Punkten $P_1$, $P_2$, ..., $P_{NL}$ auf dem Sichtliniensegment, wobei $P_1$ und $P_{NL}$ diejenigen Punkte des Sichtliniensegmentes sind, die die Ränder des Querschnittes des ionisierten Gasringes schneiden;
 - Berechnen der Abstände $r_i$ zwischen den Punkten $P_i$ (i = 1, 2, ..., NL) und der Plasmamitte und Berechnen der normierten Abstände $\rho_i = r_i / a$;
 - Erstellen einer Matrix $J_{\rho i}$, deren Element der Zeile i und der Spalte j gleich Jo $(\rho_i \cdot Z_j)$ ist, wobei Jo $(\rho_i \cdot Z_j)$ die Funktion Jo der Ordnung 0 in Abhängigkeit von den Argumenten $(\rho_i \cdot Z_j)$ (i = 1,2, ..., NL und j = 1,2, ..., NB) ist, die Matrix $J_{\rho i}$ derart gewählt ist, dass gilt:

$$A_{\rho i} = J_{\rho i} \cdot C$$

wobei $A_{\rho i}$ ein Feld ist, das das Emissivitätsprofil entlang der normierten Abstände $\rho_i$ darstellt, und C die Koeffizientenmatrix ist;

- für jede Spalte j von $J_{\rho i}$ (j = 1, 2, ..., NB) erfolgendes Berechnen einer ganzen Zahl $F_j$ derart, dass gilt:

$$F_j = \delta \cdot \Sigma_i \, Jo \, (\rho_i \cdot Z_j)$$

wobei $\delta$ eine geometrische Konstante ist und i von 1 bis NL läuft;

- Berechnen einer Matrix F derart, dass gilt:

$$F = [F_1 \, F_2 \, ... \, F_{NB}]$$

- Berechnen der pseudoinversen Matrix $F^{-1}$ der Matrix F;
- Berechnen einer Matrix M derart, dass gilt:

$$M = (J_\rho \cdot F^{-1}) \, / \, EG$$

wobei EG die geometrische Ausdehnung des Detektors ist;

- Berechnen des lokalen Emissivitätsprofilfeldes $A_\rho$ der suprathermischen Elektronen derart, dass gilt:

$$A_\rho = M \cdot Y \, / \, 1000$$

**2.** Verfahren nach Anspruch 1, **dadurch gekennzeichnet, dass** es einen Prüfschritt zum Prüfen der Elemente des Feldes $A_\rho$ umfasst, wobei der Prüfschritt wenigstens einen der nachfolgenden Schritte umfasst:

- (a) Prüfen, ob dasjenige Element des Feldes $A_\rho$, das das lokale Emissivitätsprofil am Umfang des ionisierten Gasringes darstellt, von 0 verschieden ist;
- (b) Prüfen, ob ein beliebiges Element des Feldes $A_\rho$ negativ oder gleich einem Wert größer als ein Schwellenwert ist;
- (c) Prüfen, ob die Anzahl der lokalen Maxima des Feldes $A_\rho$ größer als eine zulässige Maximalzahl ist.

**3.** Verfahren nach Anspruch 1 oder 2, **dadurch gekennzeichnet, dass** es umfasst:

- Berechnen der pseudoinversen Matrix $(J_\rho)^{-1}$ der Matrix $J_\rho$;
- Berechnen einer Matrix N derart, dass gilt:

$$N = (F \cdot (J_\rho)^{-1}) \cdot EG$$

- Berechnen der Rekonstruktionslinienintegriermessung $Y_R$ entsprechend dem integrierten Plasmaemissivitätsdatum Y derart, dass gilt:

$$Y_R = N \cdot A_\rho \cdot 1000$$

- Berechnen des Wertes $\chi^2$ derart, dass gilt:

$$\chi^2 = [\Sigma \text{ von } n=1 \text{ bis } NC_F] (Y_n - Y_{Rn})^2 / NC_F$$

wobei $Y_n$ das integrierte Plasmaemissivitätsdatum ist, das die integrierte Plasmaemissivität darstellt, die von einem Detektor des Ranges n gemessen wird, $Y_{Rn}$ die Rekonstruktionslinienintegriermessung entsprechend dem Plasmaemissivitätsdatum $Y_n$ ist und $NC_F$ die Anzahl der Detektoren ist;
- Prüfen, ob $\chi^2$ größer als ein fester Schwellenwert ist.

4. Verfahren nach Anspruch 3, **dadurch gekennzeichnet, dass** es vor dem Berechnen des Wertes $\chi^2$ einen Schritt des Prüfens dahingehend umfasst, ob wenigstens ein Element des Feldes $Y_R$ negativ ist.

5. Verfahren nach Anspruch 4, **dadurch gekennzeichnet, dass** für den Fall, dass wenigstens ein Element des Feldes $Y_R$ negativ ist, das Verfahren anhält oder andernfalls fortfährt.

6. Verfahren nach Anspruch 3, **dadurch gekennzeichnet, dass** für den Fall, dass $\chi^2$ größer als ein fester Schwellenwert ist, das Verfahren anhält oder andernfalls fortfährt.

7. Verfahren nach einem der vorhergehenden Ansprüche, **dadurch gekennzeichnet, dass** für den Fall, dass die Punkte $P_i$ gleich beabstandet sind, die Berechnung der Abstände $r_i$ zwischen Punkten $P_i$ (i = 1, 2, ..., NL) und der Plasmamitte nur für diejenigen Punkte $P_i$ erfolgt, die zwischen $P_1$ und der Mitte des Segmentes $P_1 P_{NL}$, wobei $P_1$ eingeschlossen ist, oder zwischen der Mitte des Segmentes $P_1 P_{NL}$ und $P_{NL}$, wobei $P_{NL}$ eingeschlossen ist, liegen.

8. Verfahren nach einem der vorhergehenden Ansprüche, **dadurch gekennzeichnet, dass** es eine Mittelungsphase zur Berechnung des Messemissivitätsdatums Y in Form von rohen integrierten Emissivitätsdaten umfasst, die entlang einer vorbestimmten Anzahl von aufeinanderfolgenden Zeitabstastungen berechnet werden.

9. Verfahren nach einem der vorhergehenden Ansprüche, **dadurch gekennzeichnet, dass** es einen Schritt des Filterns von rohen Messdaten umfasst.

10. Verfahren nach einem der vorhergehenden Ansprüche, **dadurch gekennzeichnet, dass** es einen vorbereitenden Schritt des Vergleichens einer Anzahl von verfügbaren Sichtlinien mit einem zulässigen Minimalwert umfasst, sodass das Verfahren anhält, wenn die Anzahl der verfügbaren Sichtlinien kleiner als der zulässige Minimalwert ist.

11. Verfahren zum Echtzeitbestimmen des lokalen Emissivitätsprofils von suprathermischen Elektronen, die einem Plasma genannten ionisierten Gasring entstammen, der in einem torischen Behälter angeordnet ist, wobei das Verfahren umfasst:

- Lesen wenigstens einer Echtzeitmessung Y der integrierten Plasmaemissivität entlang einer Sichtlinie wenigstens eines Detektors mit einer Anordnung in Bezug auf den torischen Behälter derart, dass die Sichtlinie des Detektors einen Querschnitt des torischen Behälters und einen Querschnitt des ionisierten Gasringes mit dem Radius "a" schneidet;
- Echtzeitlesen der Plasmamittenkoordinaten, die den Hauptradiuswert Rp, den Vertikalversatzwert Zp und den Plasmanebenradius "a" umfassen;
- Echtzeitbestimmen des lokalen Emissivitätsprofils auf Grundlage eines Verfahrens entsprechend einem der Ansprüche 1 ist 10.

**Revendications**

1. Procédé de détermination d'un profil d'émissivité locale d'électrons suprathermiques provenant d'un anneau de gaz ionisé, appelé plasma, placé dans une cuve torique, à l'aide d'un système spectrométrique comprenant au moins un détecteur, le détecteur étant positionné en relation avec la cuve torique de sorte que la ligne de visée du détecteur intercepte une section transversale circulaire de la cuve torique et une section transversale circulaire de l'anneau de gaz ionisé avec un rayon « a », ladite section transversale circulaire de l'anneau de gaz ionisé étant excentrée par rapport à ladite section transversale circulaire de la cuve torique, **caractérisé par** les étapes suivantes consistant à :

- calculer les premiers NB zéros $Z_1, Z_2, ..., Z_{NB}$ des fonctions de Bessel Jo d'ordre 0,
- construire une matrice $J_\rho$, l'élément de rangée k et de colonne j qui est $Jo(\rho_k * Z_j)$, $Jo(\rho_k * Z_j)$ étant la fonction Jo d'ordre 0 d'arguments $(\rho_k * Z_j)$ (k = 1, 2, ..., NM et j = 1, 2, ..., NB), $\rho_k$ étant la distance normalisée par rapport au rayon « a » entre un point $P_k$ du plasma et le centre de plasma, la matrice $J_\rho$ étant telle que :

$$A_\rho \;=\; J_\rho \;*\; C,$$

$A_\rho$ étant un tableau, dont les éléments représentent le profil d'émissivité le long d'un rayon de plasma normalisé $\rho$ et C étant une matrice de coefficients,
- lire des données de mesure, lesdites données de mesure comprenant une donnée d'émissivité de plasma Y représentant l'émissivité intégrée de plasma mesurée par le détecteur le long de la ligne de visée, les coordonnées de centre de plasma comprenant une valeur de rayon majeur Rp, une valeur de décalage vertical Zp et un rayon mineur de plasma « a »,
- calculer la position géométrique du segment de ligne de visée qui intercepte la section transversale de l'anneau de gaz ionisé par rapport à un système de coordonnées centré en (Rp, 0, Zp),
- calculer la position de NL points successifs $P_1, P_2, ..., P_{NL}$ sur ledit segment de ligne de visée, $P_1$ et $P_{NL}$ étant les points dudit segment de ligne de visée qui interceptent les frontières de la section transversale de l'anneau de gaz ionisé,
- calculer les distances $r_i$ entre les points $P_i$ (i = 1 , 2, ..., NL) et le centre de plasma et calculer les distances normalisées $\rho_i = r_i/a$,
- construire une matrice $J_{\rho i}$, dont l'élément de rangée i et de colonne j est $Jo(\rho_i * Z_j)$, $Jo(\rho_i * Z_j)$ étant la fonction Jo d'ordre 0 d'arguments $\rho_i * Z_j$ (i = 1, 2, ..., NL et j = 1, 2, ..., NB) , la matrice $J_{\rho i}$ étant telle que :

$$A_{\rho i} \;=\; J_{\rho i} \;*\; C,$$

$A_{\rho i}$ étant un tableau représentant le profil d'émissivité le long des distances normalisées $\rho_i$ et C étant ladite matrice de coefficients,
- calculer pour chaque colonne j de $J_{\rho i}$, (J = 1, 2, ..., NB) l'intégrale $F_j$ telle que :

$$F_j \;=\; \delta \;*\; \Sigma_i \; Jo(\rho_i \;*\; Z_j)$$

où $\delta$ est une constante géométrique et i va de 1 à NL,
- calculer une matrice F telle que :

$$F \;=\; [F_1 \; F_2 \; ... \; F_{NB}]$$

- calculer une matrice $F^{-1}$, la matrice pseudo-inverse de 1a matrice F,
- calculer une matrice M telle que :

$$M \;=\; (J_\rho \;*\; F^{-1})/EG$$

EG étant l'extension géométrique du détecteur,
- calculer le tableau de profil d'émissivité locale d'électrons suprathermiques $A_\rho$ tel que :

$$A\rho = M * Y/1000$$

**2.** Procédé selon la revendication 1, **caractérisé en ce qu'**il comprend une étape de vérification pour vérifier les éléments du tableau $A_\rho$, ladite étape de vérification comprenant au moins l'une des étapes suivantes consistant à :

- a) vérifier si l'élément du tableau $A_\rho$ qui représente le profil d'émissivité locale sur la circonférence de l'anneau de gaz ionisé est différent de zéro,
- b) vérifier si tout élément du tableau $A_\rho$ est négatif ou une valeur supérieure à une valeur seuil,
- c) vérifier si le nombre de maxima locaux du tableau $A_\rho$ est supérieur à un nombre maximum permis.

**3.** Procédé selon la revendication 1 ou 2, **caractérisé en ce qu'**il comprend :

- le calcul de $(J_\rho)^{-1}$ la matrice pseudo-inverse de la matrice $J_\rho$,
- le calcul d'une matrice N telle que :

$$N = (F * (J_\rho)^{-1}) * EG,$$

- le calcul de la mesure intégrée de ligne reconstruite $Y_R$ correspondant à la donnée d'émissivité de plasma intégré Y telle que :

$$Y_R = N * A_\rho * 1000$$

- le calcul de la valeur $\chi^2$ telle que :

$$\chi^2 = \sum_{n=1}^{NC_F} (Y_n - Y_{Rn})^2 / NC_F$$

$Y_n$ étant la donnée d'émissivité de plasma intégré représentant l'émissivité de plasma intégré mesurée par un détecteur de rang n, $Y_{Rn}$ étant la mesure intégrée de ligne reconstruite correspondant à la donnée d'émissivité de plasma $Y_n$ et $NC_F$ étant le nombre de détecteurs
- la vérification pour savoir si $\chi^2$ est supérieur à une valeur seuil fixée.

**4.** Procédé selon la revendication 3, **caractérisé en ce que**, avant le calcul de la valeur $\chi^2$, il comprend une étape destinée à vérifier si au moins un élément du tableau $Y_R$ est négatif.

**5.** Procédé selon la revendication 4, **caractérisé en ce que**, si au moins un élément du tableau $Y_R$ est négatif, le procédé s'arrête ou il continue si ce n'est pas le cas.

**6.** Procédé selon la revendication 3, **caractérisé en ce que**, si $\chi^2$ est supérieur à une valeur de seuil fixée, le procédé s'arrête ou continue si ce n'est pas le cas.

**7.** Procédé selon l'une quelconque des revendications précédentes, **caractérisé en ce que**, si les points $P_i$ sont espacés de manière égale, le calcul des distances $r_i$ entre les points $P_i$ (i = 1, 2, ..., NL) et le centre de plasma est uniquement réalisé pour les points $P_i$ situés entre $P_1$ et le milieu du segment $P_1 P_{NL}$, $P_1$ étant inclus, ou situé entre le milieu du segment $P_1 P_{NL}$ et $P_{NL}$, $P_{NL}$ étant inclus.

**8.** Procédé selon l'une quelconque des revendications précédentes, **caractérisé en ce qu'**il comprend une phase de moyenne pour calculer ladite donnée d'émissivité de mesure Y sous la forme de données d'émissivité intégrées brutes calculée selon un nombre prédéterminé d'échantillons temporels consécutifs.

9. Procédé selon l'une quelconque des revendications précédentes, **caractérisé en ce qu'**il comprend une étape destinée à filtrer les données de mesure brutes.

10. Procédé selon l'une quelconque des revendications précédentes, **caractérisé en ce qu'**il comprend une étape préliminaire consistant à comparer un nombre de lignes de visée disponibles à une valeur minimum permise, de sorte que le procédé s'arrête si ledit nombre de lignes de visée disponibles est inférieur à ladite valeur minimum permise.

11. Procédé pour la détermination en temps réel du profil d'émissivité locale d'électrons suprathermiques provenant d'un anneau de gaz ionisé, appelé plasma, placé dans une cuve torique, ledit procédé comprenant :

    - la lecture d'au moins une mesure en temps réel Y d'émissivité de plasma intégré selon une ligne de visée d'au moins un détecteur positionné en relation avec la cuve torique de sorte que la ligne de visée du détecteur intercepte une section transversale de la cuve torique et une section transversale de l'anneau de gaz ionisé avec un rayon « a »,
    - la lecture en temps réel des coordonnées de centre de plasma comprenant la valeur de rayon majeur Rp, la valeur de décalage vertical Zp et le rayon mineur de plasma « a »,
    - la détermination en temps réel du profil d'émissivité locale sur la base d'un procédé selon l'une quelconque des revendications 1 à 10.

FIG. 1

FIG. 2

FIG. 3

EP 1 675 444 B1

FIG. 4

FIG. 6

FIG. 5

FIG. 7

FIG. 8

EP 1 675 444 B1

FIG. 9A

FIG. 9B

FIG. 10

FIG. 11

FIG. 12

FIG. 13

```
        ┌─────────────┐
        │    Start     │
        └─────────────┘
               │
               ▼
   ┌───────────────────────┐
   │   Parameter setting    │
   └───────────────────────┘
               │
               ▼
   ┌───────────────────────┐
   │ Initialize code :: FUN_1 │
   └───────────────────────┘
               │
               ▼
```

Execute main program cycle :: FUN_2

Initialize main program variables :: FUN_4

Read input data :: FUN_5

Data pre-elaboration :: FUN_6

Change coordinate centre :: FUN_7

Compute chord intercepts with plasma boundary :: FUN_8

Compute matrix F :: FUN_9

Determine emissivity profile :: FUN_10

Check emissivity profile validity :: FUN_11

Compute reconstructed integrated data :: FUN_12

Determine chi square $^2$ between Y and YR :: FUN_13

Write output data :: FUN_3

```
        ┌─────────────┐
        │     End      │
        └─────────────┘
```

FIG. 14

Start FUN_2

Is Exit from FUN_1 without errors? — N → Set abort and eventCode

Y

Initialize the cycle :: FUN_4

Read data from the input buffer :: FUN_5

Is Exit from FUN_5 without errors? — N → Set abort and eventCode

Y

Pre-treatment of input data :: FUN_6

Is Exit from FUN_6 without errors? — N → Set abort and eventCode

Y

Consider the plasma geometric center as new coordinate center :: FUN_7

Is Exit from FUN_7 without errors? — N → Set abort and eventCode

Y

Determine the intercept(s) of the chord(s) with the plasma boundary :: FUN_8

Is Exit from FUN_8 without errors? — N → Set abort and eventCode

Y

Compute distances of the points of the chords from the plasma center and compute F matrix :: FUN_9

# FIG. 15

Is Exit from FUN_9 without errors? —**N**→ Set abort and eventCode

↓**Y**

Compute $F^{-1}$, the pseudo-inverse of F matrix

Is this computation without errors? —**N**→ Set abort and eventCode

↓**Y**

Calculate the suprathermal electron local emissivity profile $A\rho$ :: FUN_10

Is Exit from FUN_10 without errors? —**N**→ Set abort and eventCode

↓**Y**

Check the computed local emissivity profile :: FUN_11

Is Exit from FUN_11 without errors? —**N**→ Set abort and eventCode

↓**Y**

Determine the reconstructed line integrated measurement $Y_R$ :: FUN_12

Is Exit from FUN_12 without errors? —**N**→ Set abort and eventCode

↓**Y**

Calculate chi square between reconstructed and raw line integrated profiles :: FUN_13

Write data to the output buffer :: FUN_13

End FUN_2

# FIG. 16

Start **FUN_5**

Read raw detector data from the input buffer -> Y

Divide the content of Y by the sampling time

## FIG. 17

Is the number of valid chord data greater than the minimum alloowed?

**N** → Set abort and eventCode

**Y**

Get the value of the plasma major radius $R_P$

Is $R_P$ in the valid range?

**N** → Set abort and eventCode

**Y**

Get the value of the plasma minor radius $a$

Is $a$ in the valid range?

**N** → Set abort and eventCode

**Y**

Get the value of the plasma center vertical shift $Z_P$

Is $Z_P$ in the valid range?

**N** → Set abort and eventCode

**Y**

End **FUN_5**

FIG. 18

FIG. 19

Start **FUN_8**

Repeat for each chord

Calculate the determinant $= T^2 * I^2 - (1 + T^2) * (I^2 - a^2)$

Is greater than or equal to 0?

**N**

**Y**

Compute the x and z coordinates of the points intercepting the plasma boundary

Is the number of chords intercepting the plasma greater than the minimum allowed?

**N**

Set abort and eventCode

**Y**

End **FUN_8**

# FIG. 20

Start **FUN_9**

Repeat for each chord intercepting the plasma

Consider each chord subdivided in NL equally spaced points

Due to assumption (g) determine the distance ri of the points Pi belonging to the chord, from the plasma geometric centre and not from the magnetic centre of the flux surface to witch it belongs

Only the distances of the first NL/2 points are computed (symmetry reason)

Compute the value of the NB Bessel functions Jo of order 0 on the arguments $((ri/a)*Z)$

Is this computation without errors?

N → Set abort and eventCode

Y

Calculate the integrals F of the Bessel functions Jo

Is this computation without errors?

N → Set abort and eventCode

Y

Abort loop

End **FUN_9**

# FIG. 21

Start **FUN_10**

Calculate the matrix $M = (J *F^{-1})/EG$

Is the calculation of M without errors?

**N** ——→ Set abort and eventCode

**Y**

Determine the suprathermal electron local emissivity profile $A\rho = M*Y/1000$

End **FUN_10**

# FIG. 22

Start FUN_11

Is Aρ [*a*] different from 0? —— **Y** ——▶ Set abort and eventCode

**N**

Is there any value of Aρ < 0 or too big? —— **Y** ——▶ Set abort and eventCode

**N**

Is the number of local maxima of Aρ greater than the maximum allowed? —— **Y** ——▶ Set abort and eventCode

**N**

End FUN_11

# FIG. 23

Start **FUN_12**

Calculate the matrix $N = (F*J^{-1})*EG$

Determine the reconstructed line integrated measurement profile $Y_R = N*A\rho*1000$

Are there $Y_R$ values < 0?

**Y** → Set abort and eventCode

**N**

End **FUN_12**

# FIG. 24

Start **FUN_13**

Calculate $\chi^2$ between Y and $Y_R$: $\chi^2 = (\Sigma_i (Y_i - Y_{Ri})^2)/NC_F$

**N**

Is the $\chi^2$ greater than the fixed threshold?

**Y** → Set abort and eventCode

**N**

End **FUN_13**

# FIG. 25

```
        ┌─────────────────────┐
        │    Start FUN_3      │
        └─────────────────────┘
                   │
                   ▼
  ┌───────────────────────────────────────────────┐
  │ Normalize local emissivity profile Aρ between  │
  │              0 and 1                           │
  └───────────────────────────────────────────────┘
                   │
                   ▼
  ┌───────────────────────────────────────────────┐
  │        Write profile Aρ in output buffer       │
  └───────────────────────────────────────────────┘
                   │
                   ▼
  ┌───────────────────────────────────────────────┐
  │ Normalize reconstructed measurement profile    │
  │          Y_R between 0 and 1                   │
  └───────────────────────────────────────────────┘
                   │
                   ▼
  ┌───────────────────────────────────────────────┐
  │ Write reconstructed measurements Y_R in output │
  │              buffer                            │
  └───────────────────────────────────────────────┘
                   │
                   ▼
  ┌───────────────────────────────────────────────┐
  │ Write relevant parameters and data in output   │
  │              buffer                            │
  └───────────────────────────────────────────────┘
                   │
                   ▼
        ┌─────────────────────┐
        │     End FUN_3       │
        └─────────────────────┘
```

# FIG. 26

FIG. 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. PEYSSON ; FRÉDÉRIC IMBEAUX.** Tomography of the fast electron bremsstrahlung emission during lower hybrid current drive on TORE SUPRA. *Rev. Sci. Instrum.,* 1999, vol. 70 (10), 3987-4007

- **J. WESSON.** Tokamaks. Clarendon Press, 1997, 108-121